(19)

Europäisches
Patentamt
European
Patent Office
Office européen
des brevets

(11) **EP 4 693 555 A1**

(12) **EUROPEAN PATENT APPLICATION**
published in accordance with Art. 153(4) EPC

(43) Date of publication:
**11.02.2026   Bulletin 2026/07**

(21) Application number: **24791876.6**

(22) Date of filing: **08.04.2024**

(51) International Patent Classification (IPC):
***H01M 10/0525*** (2010.01)

(52) Cooperative Patent Classification (CPC):
**Y02E 60/10**

(86) International application number:
**PCT/CN2024/086582**

(87) International publication number:
**WO 2024/217291 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **17.04.2023   CN 202310458768**

(71) Applicants:
• **Huawei Technologies Co., Ltd.
  Shenzhen, Guangdong 518129 (CN)**
• **Shenzhen Capchem Technology Co., Ltd.
  Shenzhen, Guangdong 518118 (CN)**

(72) Inventors:
• **MA, Qiang
  Shenzhen, Guangdong 518129 (CN)**
• **DENG, Yaoming
  Shenzhen, Guangdong 518129 (CN)**
• **DENG, Yonghong
  Shenzhen, Guangdong 518118 (CN)**
• **QIAN, Yunxian
  Shenzhen, Guangdong 518118 (CN)**

(74) Representative: **Körber, Martin Hans
  Mitscherlich PartmbB
  Patent- und Rechtsanwälte
  Karlstraße 7
  80333 München (DE)**

(54) **SECONDARY BATTERY AND PREPARATION METHOD THEREFOR AND ELECTRIC DEVICE**

(57)    A secondary battery and a preparation method thereof, and a power-consuming device are provided. The secondary battery includes a positive electrode, a negative electrode, a separator, and an electrolyte. The positive electrode includes a positive electrode active material. The positive electrode active material includes an active material core and a carbon material coating layer. The electrolyte includes an electrolyte salt, an organic solvent, and an additive. The additive includes a silane additive. An amount of the silane additive is determined based on a specific surface area of the positive electrode active material and a content of a carbon material in the positive electrode active material. In the secondary battery, an appropriate amount of the required additive is determined based on physicochemical properties of the electrode material, and the silane additive in the electrolyte can preferentially react on a surface of the positive electrode to form a CEI film, passivating active sites on the surface of the electrode, suppressing dissolution of metal ions, reducing side reactions between the electrolyte and the electrode material, and improving electrochemical performance of the battery.

FIG. 1

EP 4 693 555 A1

## Description

This application claims priority to Chinese Patent Application No. 202310458768.2, filed with the China National Intellectual Property Administration on April 17, 2023 and entitled "SECONDARY BATTERY AND PREPARATION METHOD THEREOF, AND POWER-CONSUMING DEVICE", which is incorporated herein by reference in its entirety.

## TECHNICAL FIELD

This application relates to the field of battery technologies, and in particular, to a secondary battery and a preparation method thereof, and a power-consuming device.

## BACKGROUND

Lithium-ion batteries have advantages of high energy density, a high discharge voltage, a long cycle life, and the like, and are widely used in fields like electronic devices, electric vehicles (EV), hybrid electric vehicles (HEV), and energy storage. With the development of power and energy storage markets, people have increasing requirements on endurance, operational environments, and the like of the lithium-ion batteries. Therefore, there is an urgent need to develop lithium-ion batteries with a long service life and a wide temperature range.

Especially under extreme conditions such as high temperatures and low temperatures, cycle and safety problems of lithium-ion batteries become particularly prominent. As an important part of lithium-ion batteries, electrolytes are closely related to battery performance. Currently, to improve conductivity of positive electrode materials, a surface of the positive electrode material is usually coated with a carbon material layer. However, defects or incomplete coverage are prone to occur during preparation for the carbon material on the surface of the positive electrode material. This can result in decomposition of the electrolyte at a positive electrode - electlyte interface under the action of an oxidation potential, and consumption of active lithium, increase of side reactions of the electrolyte. Especially at under high temperature conditions, the side reactions of the electrolyte are exacerbated, which accelerates the decomposition at the positive electrode-electlyte interface, and consumes active lithium. This can even cause blockage or structure collapse of lithium-conducting channels of the carbon material applied on the surface of the positive electrode active material, resulting in dissolution of metal ions from the positive electrode active material. Consequently, electrochemical performance of the battery, such as cycle stability, energy density, and rate performance degrades rapidly.

## SUMMARY

An objective of this application is to provide a secondary battery and a preparation method thereof, and a power-consuming device, to resolve a problem of limitation on battery performance by side reactions between an electrolyte and an electrode material in an existing secondary battery.

To achieve the objective of this application, the following technical solutions are provided in this application.

A first aspect of this application provides a secondary battery. The secondary battery includes a positive electrode, a negative electrode, a separator, and an electrolyte, where the positive electrode includes a positive electrode active material, the positive electrode active material includes an active material core and a carbon material coating layer, the electrolyte includes an electrolyte salt, an organic solvent, and an additive, and the additive includes a silane additive, where an amount of the silane additive is determined based on a specific surface area of the positive electrode active material and a content of a carbon material in the positive electrode active material.

In the secondary battery provided in this application, the additive of the electrolyte includes the silane additive. In a process of initial charging and discharging of the battery, the silane additive can preferentially react with oxygen-containing functional groups and other active sites in the carbon material on the surface of the positive electrode active material to be preferentially oxidized into silane and a compound containing heteroatoms, forming a CEI film on the surface of the positive electrode. Reactivity on the surface of the carbon material coating layer is passivated, disordering of the carbon material coating layer is suppressed, and side reactions catalyzed due to contact between the active sites in the carbon material coating layer in the positive electrode active material and other components in the electrolyte are avoided. Irreversible consumption of active metal ions is reduced, and a risk of blockage or structure collapse of a metal ion conducting channel of the carbon material coating layer in the positive electrode active material is reduced, increasing an ordering degree of the carbon material coating layer, and ensuring metal ion transport. In this way, battery impedance can be reduced, battery cycle performance can be improved, and high-temperature performance can be improved. In addition, in this application, the amount of the silane additive is determined based on the specific surface area of the positive electrode active material and the content of the carbon material in the positive electrode active material. An appropriate amount of the required additive is determined based on physicochemical properties of the electrode material, providing guidance for designing the matching of the electrode material and the electrolyte. This avoids problems such as failure to effectively reduce side reactions between the electrolyte and the electrode material, and failure to reduce internal resistance that are caused by an inappropriate amount of the additive in the electrolyte, thereby better ensuring electrochemical performance of the secondary battery.

In some possible implementations of the secondary battery of this application, in the secondary battery, a percentage by mass of the silane additive in the electrolyte is denoted as f (unit: %), the specific surface area of the positive electrode active material is denoted as a (unit: $m^2/g$), and a percentage by mass of the carbon material in the positive electrode active material is denoted as e (unit: %), such that $Z = f/(a*e)$ meets $0.001 \leq Z \leq 15$. In this case, the electrode material and the electrolyte in the battery have good matching effect, so that side reactions between the electrolyte and the electrode material can be effectively reduced, impedance can be reduced, battery cycle performance can be improved, and battery high-temperature performance can be improved.

In some possible implementations of the secondary battery of this application, the silane additive includes at least one of tris(trimethylsilyl)phosphate, tris(trimethylsilyl)borate, tris(trimethylsilyl)phosphite, tris(triethylsilyl)phosphate, tris(triethylsilyl)borate, tris(triethylsilyl)phosphite, tris(trifluoromethylsilyl)phosphate, tris(trifluoromethylsilyl)borate, tris(trifluoromethylsilyl)phosphite, tris(trifluoroethylsilyl)phosphate, tris(trifluoroethylsilyl)borate, and tris(trifluoroethylsilyl)phosphite. In this case, these silane additives have a more appropriate oxidation potential than other additives. In a process of initial charging and discharging of the battery, the silane additive preferentially reacts with oxygen-containing functional groups and other active sites in the carbon material on the surface of the positive electrode active material, passivating reactivity on the surface of the carbon material coating layer, and suppressing disordering of the carbon material coating layer, and is preferentially oxidized into silane and a compound containing heteroatoms such as phosphorus and boron, forming a CEI film on the surface of the positive electrode.

In some possible implementations of the secondary battery of this application, the percentage by mass of the silane additive in the electrolyte is 0.01% to 1.0%. With this addition content, reaction active sites and defects on the surface of the carbon material coating layer can be fully passivated, and a CEI film can be formed on the surface of the positive electrode, better reducing disordering of the carbon material coating layer, improving ion transport efficiency, reducing side reactions between the electrolyte and the positive electrode material, reducing irreversible consumption of active metal ions, maintaining a structure of a metal ion conducting channel of the carbon material coating layer, reducing battery impedance, improving battery cycle performance and safety performance, and improving high-temperature performance.

In some possible implementations of the secondary battery of this application, the percentage by mass of the carbon material in the positive electrode active material is 0.5% to 5%. In this case, the content of the carbon material coating layer in the positive electrode active material can ensure that the active material core is fully and completely coated, improving conductivity of the active material core, helping reduce internal resistance and polarization, and improving a cycle life, fast charging performance, energy efficiency, and other characteristics of the battery.

In some possible implementations of the secondary battery of this application, the specific surface area of the positive electrode active material is $0.1\ m^2/g$ to $20\ m^2/g$. This specific surface area ensures a large specific surface area of deintercalation activity of ions in a process of charging and discharging of the battery, and helps control side reactions between the positive electrode active material and the electrolyte.

In some possible implementations of the secondary battery of this application, the active material core includes at least one of a metal oxide and a polyanionic salt. In this case, these active materials included in the core of the positive electrode active material have high capacity and safety, and other characteristics.

In some possible implementations of the secondary battery of this application, the metal oxide includes at least one of lithium cobaltate, lithium nickelate, lithium nickel cobalt manganese oxide, lithium nickel cobalt aluminum oxide, lithium manganate, lithium nickel manganese oxide, and lithium vanadate. These active materials have high capacity and safety, and other characteristics.

In some possible implementations of the secondary battery of this application, the polyanionic salt includes at least one of lithium iron phosphate, lithium manganese phosphate, lithium manganese iron phosphate, lithium vanadium phosphate, lithium vanadyl phosphate, lithium cobalt phosphate, lithium nickel phosphate, lithium iron silicate, lithium iron fluorosulfate, lithium iron borate, and lithium iron titanate. In this case, the polyanionic salt core of the positive electrode active material has a stable polyhedral frame structure, having better structural and thermodynamic stability, so that higher cycle performance and safety can be obtained.

In some possible implementations of the secondary battery of this application, when the active material core includes the metal oxide, the specific surface area of the positive electrode active material is $0.1\ m^2/g$ to $1.0\ m^2/g$, such that $0.01 \leq Z \leq 15$ is fulfilled. Under this condition, side reactions between the electrolyte and the electrode material can be effectively reduced, impedance can be reduced, battery cycle performance can be improved, and battery high-temperature performance can be improved.

In some possible implementations of the secondary battery of this application, when the active material core includes the metal oxide, the specific surface area of the positive electrode active material is $0.2\ m^2/g$ to $0.8\ m^2/g$, such that $0.02 \leq Z \leq 10$ is fulfilled. In this case, side reactions between the electrolyte and the electrode material can be more effectively reduced, impedance can be reduced, battery cycle performance can be improved, and battery high-temperature performance can be improved.

In some possible implementations of the secondary battery of this application, when the active material core includes the polyanionic salt, the specific surface area of the positive electrode active material is 7 $m^2/g$ to 20 $m^2/g$, such that $0.001 \leq Z \leq 0.2$ is fulfilled. Under this condition, side reactions between the electrolyte and the electrode material can be effectively reduced, impedance can be reduced, battery cycle performance can be improved, and battery high-temperature performance can be improved.

In some possible implementations of the secondary battery of this application, when the active material core includes the polyanionic salt, the specific surface area of the positive electrode active material is 9 $m^2/g$ to 15 $m^2/g$, such that $0.002 \leq Z \leq 0.1$ is fulfilled. In this case, side reactions between the electrolyte and the electrode material can be more effectively reduced, impedance can be reduced, battery cycle performance can be improved, and battery high-temperature performance can be improved.

In some possible implementations of the secondary battery of this application, a peak intensity ratio of a D peak to a G peak of the positive electrode active material in a Raman test is $R = I_D/I_G$, and a value range of R is 0.6 to 1.3. In this case, it is ensured that there is an appropriate ion migration and transport channel in the carbon material coating layer on the surface of the positive electrode active material.

In some possible implementations of the secondary battery of this application, the value range of the peak intensity ratio R of the D peak to the G peak of the positive electrode active material in the Raman test is 0.8 to 1.2. In this case, the carbon material coating layer on the surface in the positive electrode active material of the secondary battery can better improve conductivity of the core of the positive electrode active material and provide more appropriate ion migration and transport efficiency.

In some possible implementations of the secondary battery of this application, the additive further includes vinylene carbonate. In this case, vinylene carbonate can undergo an electrochemical reaction on a surface of the negative electrode in a process of initial charging and discharging of the secondary battery to form a solid electrolyte interphase film, that is, an SEI film, effectively suppressing intercalation of solvent molecules and a swelling phenomenon of the battery, and improving capacity and a service life of the battery.

In some possible implementations of the secondary battery of this application, a percentage by mass of the vinylene carbonate in the electrolyte is 0.1% to 5%. In this case, vinylene carbonate in the percentage by mass of 0.1% to 5% in the electrolyte fully ensures film forming effect of the vinylene carbonate on the surface of the negative electrode, forming an SEI film, isolating the negative electrode material from the electrolyte, and suppressing formation of dendrites due to deposition and reduction of metal ions on the negative electrode, to avoid damage to stability of the negative electrode structure and the SEI film.

In some possible implementations of the secondary battery of this application, the electrolyte salt includes at least one of $LiClO_4$, $LiBF_4$, $LiPF_6$, $LiAsF_6$, $LiCF_3SO_3$, LiTDI, $Li[(CF_3SO_2)_2N]$, $Li[(FSO_2)_2N]$, and $Li[(C_mF_{2m+1}SO_2)(C_nF_{2n+1}SO_2)N]$, where m and n are natural numbers. In this case, these electrolyte salts can ensure high ionic conductivity of the electrolyte, and do not undergo adverse side reactions with the electrode material, the electrolyte, the separator, and the like, providing good chemical stability.

In some possible implementations of the secondary battery of this application, a molar concentration of the electrolyte salt is 0.01 mol/L to 5.0 mol/L. In this case, the electrolyte salt with the molar concentration of 0.01 mol/L to 5.0 mol/L in the electrolyte can ensure high ionic conductivity of the electrolyte.

In some possible implementations of the secondary battery of this application, the organic solvent includes at least one of a carbonate solvent, an ether solvent, and a carboxylate solvent. In this case, at least one of the organic solvents: the carbonate solvent, the ether solvent, and the carboxylate solvent allows the electrolyte salt to have good solubility, and has characteristics such as a low melting point, a high boiling point, a low vapor pressure, a wide operating temperature range, a high dielectric constant, low viscosity, and high conductivity.

In some possible implementations of the secondary battery of this application, the electrolyte further includes an auxiliary additive including at least one of biphenyl, fluorobenzene, trifluoromethyl ethylene carbonate, fluoroethylene carbonate, difluoroethylene carbonate, vinyl ethylene carbonate, 1,3-propane sultone, 1,4-butane sultone, 1,3-propene sultone, ethylene sulfate, ethylene sulfite, methylene methanedisulfonate, butanedinitrile, hexanedinitrile, 1,2-bis(2-cyanoethoxy)ethane, 1,3,6-hexanetricarbonitrile, lithium bis(oxalato)borate, lithium difluoro(oxalato)borate, lithium difluorobis(oxalato)phosphate, and lithium difluorophosphate. In this case, the electrolyte may further include the auxiliary additive. The addition of the auxiliary additive further improves stability of a CEI film and an SEI film, improves safety performance of the battery, controls contents of acid and water in the electrolyte, and improves conductivity and other performance of the electrolyte.

In some possible implementations of the secondary battery of this application, the secondary battery includes a lithium-ion battery.

In some possible implementations of the secondary battery of this application, the negative electrode includes a negative electrode active material including at least one of a carbon-based negative electrode material, a silicon-based negative electrode material, and lithium titanate. These negative electrode active materials provide a function of energy storage and release in the secondary battery, helping ion intercalation and deintercalation.

In some possible implementations of the secondary battery of this application, the secondary battery includes at least one of a cell, a battery module, and a battery pack.

A second aspect of this application provides a method for preparing a secondary battery, including the following steps:

obtaining a positive electrode, a negative electrode, and a separator, where the positive electrode includes a positive electrode active material, and the positive electrode active material includes an active material core and a carbon material coating layer;

preparing an electrolyte including an electrolyte salt, an organic solvent, and an additive, where the additive includes a silane additive, and an amount of the silane additive is determined based on a specific surface area of the positive electrode active material and a content of a carbon material in the positive electrode active material; and

assembling the positive electrode, the negative electrode, the separator, and the electrolyte into the secondary battery.

According to the method for preparing the secondary battery provided in this application, the electrolyte including the electrolyte salt, the organic solvent, and the additive is prepared and then assembled with the positive electrode, the negative electrode, and the separator to obtain the secondary battery. The electrolyte includes the silane additive whose amount is determined based on the specific surface area of the positive electrode active material and the content of the carbon material in the positive electrode active material. According to an aspect, the silane additive can preferentially react with oxygen-containing functional groups and other active sites in the carbon material on the surface of the positive electrode active material, and preferentially form a CEI film on the surface of the positive electrode, passivating reactivity on the surface of the carbon material coating layer, reducing irreversible consumption of active metal ions, suppressing disordering of the carbon material coating layer, and ensuring a metal ion transport channel, thereby improving battery cycle performance. According to another aspect, an appropriate amount of the required additive is determined based on physicochemical properties of the electrode material, avoiding problems such as failure to effectively reduce side reactions between the electrolyte and the electrode material, and failure to reduce internal resistance that are caused by an inappropriate amount of the additive in the electrolyte, thereby better ensuring electrochemical performance of the secondary battery.

In some possible implementations of the method for preparing the secondary battery of this application, in the secondary battery, a percentage by mass of the silane additive in the electrolyte is denoted as f (unit: %), the specific surface area of the positive electrode active material is denoted as a (unit: $m^2/g$), and a percentage by mass of the carbon material in the positive electrode active material is denoted as e (unit: %), such that $Z = f/(a*e)$ meets $0.001 \leq Z \leq 15$. In this case, the electrode material and the electrolyte in the battery have good matching effect, so that side reactions between the electrolyte and the electrode material can be effectively reduced, impedance can be reduced, battery cycle performance can be improved, and battery high-temperature performance can be improved.

In some possible implementations of the method for preparing the secondary battery of this application, the silane additive includes at least one of tris(trimethylsilyl)phosphate, tris(trimethylsilyl)borate, tris(trimethylsilyl)phosphite, tris(triethylsilyl)phosphate, tris(triethylsilyl)borate, tris(triethylsilyl)phosphite, tris(trifluoromethylsilyl)phosphate, tris(trifluoromethylsilyl)borate, tris(trifluoromethylsilyl)phosphite, tris(trifluoroethylsilyl)phosphate, tris(trifluoroethylsilyl)borate, and tris(trifluoroethylsilyl)phosphite.

In some possible implementations of the method for preparing the secondary battery of this application, the percentage by mass of the silane additive in the electrolyte is 0.01% to 1.0%.

In some possible implementations of the method for preparing the secondary battery of this application, the percentage by mass of the carbon material in the positive electrode active material is 0.5% to 5%.

In some possible implementations of the method for preparing the secondary battery of this application, the specific surface area of the positive electrode active material is 0.1 $m^2/g$ to 20 $m^2/g$.

A third aspect of this application provides a power-consuming device. The power-consuming device includes the foregoing secondary battery or the secondary battery prepared by using the foregoing method.

The power-consuming device provided in this application includes the foregoing secondary battery with high safety performance and excellent electrochemical performance, thereby improving safety and stability of power consumption of the power-consuming device.

The foregoing descriptions are merely an overview of technical solutions of this application. To more clearly understand technical means of this application, the technical means may be implemented according to the content of this specification. In addition, to make the foregoing descriptions of this application and other objectives, features, and advantages more apparent and understandable, the following describes specific implementations of this application.

## BRIEF DESCRIPTION OF DRAWINGS

FIG. 1 is a diagram of a structure of a secondary battery according to an embodiment of this application;

FIG. 2 is a schematic flowchart of a method for preparing a secondary battery according to an embodiment of this application;

FIG. 3 is a diagram of a power-consuming device of a mobile terminal according to an embodiment of this application; and

FIG. 4 is a graph of comparison between a lithium-ion battery provided in Embodiment 1 and a lithium-ion battery provided in Comparative Example 1 in a cycle performance test according to this application.

Reference numerals:

10: positive electrode, 101: positive electrode current collector, 102: positive electrode active material, 20: negative electrode, 201: negative electrode current collector, 202: negative electrode active material, 30: separator, 40: electrolyte, 300: mobile terminal.

## DESCRIPTION OF EMBODIMENTS

To make technical problems to be resolved, technical solutions, and beneficial effects in this application clearer, the following further describes this application in detail with reference to embodiments. It should be understood that the specific embodiments described herein are merely used to explain this application but are not intended to limit this application.

In this application, the term "and/or" describes an association relationship between associated objects and indicates that three relationships may exist. For example, A and/or B may indicate the following cases: Only A exists, both A and B exist, and only B exists. A and B may be singular or plural. The character "/" usually indicates an "or" relationship between the associated objects.

In this application, "at least one" means one or more, and "a plurality of" means two or more. "At least one of the following items (pieces)" or a similar expression thereof means any combination of these items, including a single item (piece) or any combination of a plurality of items (pieces). For example, "at least one of a, b, or c" or "at least one of a, b, and c" may indicate: a, b, c, a-b (namely, a and b), a-c, b-c, or a-b-c, where a, b, and c may be singular or plural.

It should be understood that sequence numbers of the foregoing processes do not mean an execution sequence in various embodiments of this application. Some or all of the steps may be performed in parallel or in sequence. The execution sequence of the processes should be determined based on functions and internal logic of the processes, and should not be construed as any limitation on the implementation processes of embodiments of this application.

Terms used in embodiments of this application are merely for describing specific embodiments, but are not intended to limit this application. The terms "a" and "the" of singular forms used in embodiments and the appended claims of this application are also intended to include plural forms, unless otherwise specified in the context clearly.

The term "primary battery" (English: primary cell) is an apparatus that exploits potential differences between different potentials of two electrodes, causing electrons to flow and thus produce electric current, thereby converting chemical energy into electric energy.

The term "cell" is a single electrochemical cell with positive and negative electrodes. The cell is a minimum unit of a power battery and is also an electric energy storage unit. Components of the cell include four main parts: a positive electrode, a negative electrode, an electrolyte, and a separator.

The term "battery module" is a module in which a plurality of cells are packaged together within a same shell frame and interact with the outside through a unified interface.

The term "battery pack" refers to an integrated unit in which several cells or battery modules are controlled or managed together by a battery management system BMS and a thermal management system. Such integrated unit is referred to as a battery pack.

The term "secondary battery", also known as a rechargeable battery or a storage battery, is a battery, after discharge, can be reactivated and reused by charging to restore its active substances.

The term "positive electrode", also referred to as cathode in English. In a primary cell, the positive electrode is an electrode with a higher potential, from which current flows out, where the positive electrode obtains electrons and undergoes reduction. In an electrolytic cell, the positive electrode is an electrode connected to a positive electrode of a power supply, and loses electrons and undergoes oxidation.

The term "negative electrode", also referred to as anode in English. In a primary battery, the negative electrode is an electrode with a lower potential, into which current flows, where the negative electrode loses electrons and undergoes oxidation. In an electrolytic cell, the negative electrode is an electrode connected to a negative electrode of a power supply, and obtains electrons and undergoes reduction.

The term "electrolyte" (English: electrolyte) is a medium that provides ion exchange between positive and negative electrodes of a battery.

The term "separator"(English: separator) is a film configured to separate positive and negative electrodes during an electrolytic reaction to prevent short circuits caused by contact between the two electrodes. In addition, the separator further has a function of allowing electrolyte ions to pass through.

The term "SEI", which is the abbreviation for "Solid Electrolyte Interphase", refers to an interphase protection film or a solid electrolyte interphase (film), and is a passivation film layer with solid electrolyte properties.

The term "CEI", which is the abbreviation for "Cathode Electrolyte Interphase", refers to an interphase protection film or a cathode electrolyte interphase (film), and is a passivation film layer with solid electrolyte properties.

At present, from the perspective of market development, lithium iron phosphate $LiFePO_4$ and other materials are preferred as a positive electrode material of an electric vehicle or an energy storage battery due to high safety and long cycle performance. However, $LiFePO_4$ and other materials have a problem of low conductivity, leading to large impedance and polarization, affecting a cycle life, fast charging performance, energy efficiency, and the like of the battery. Therefore, $LiFePO_4$ and other materials are usually coated with carbon to construct a conductive network of the carbon material on a surface of the positive electrode active material, thereby improving conductivity of the positive electrode material. However, during preparation, the carbon material applied on the surface of $LiFePO_4$ and other materials usually has defects or causes problems, for example, non-dense coating. Consequently, the electrolyte decomposes on an interface between the positive electrode and the electrolyte, and active lithium is consumed, increasing side reactions of the electrolyte. Especially at a high temperature, the side reactions of the electrolyte accelerate consumption of the active lithium and reduce electrochemical performance of the battery, such as cycle stability, energy density, and rate performance, and even cause blockage or structure collapse of a lithium-conducting channel of the carbon material applied on the surface of the positive electrode active material. As a result, metal ions are dissolved from the positive electrode active material, and consequently battery capacity is rapidly degraded, further making the electrochemical performance of the battery worse. In addition, in charge-discharge cycles of the battery, severe side reactions caused by contact between the electrolyte and the positive and negative electrode materials further cause continuous breakage and restoration of an SEI film on the surface of the negative electrode and a CEI film on the surface of the positive electrode in the cycles, consequently reducing coulombic efficiency of the battery and making cycle performance worse.

To alleviate side reactions of the electrolyte in the battery, at present, an additive is mainly introduced into the electrolyte to improve performance of the electrolyte in high and low temperature environments. For example, in some known techniques, additives such as vinylene carbonate, fluoroethylene carbonate, tris(trimethylsilyl)phosphate, vinyl ethylene carbonate, vinyl carboxylate, tris(trimethylsilyl)borate, and cyclic sulfur-containing compounds are added to the electrolyte. Although high- and low-temperature performance of the electrolyte in the battery can be improved to some extent and the side reactions can be reduced, these additives of the electrolyte are mainly provided in combination, and an internal relationship between the content of the additive of the electrolyte and characteristics of the electrode material is not specifically studied. However, an inappropriate amount of the additive of the electrolyte is likely to increase impedance inside the battery, leading to an increase in polarization, consequently reducing electrochemical performance of the battery.

Based on the foregoing considerations, to resolve a problem of side reactions between the electrolyte and the electrode material, especially a problem of limitation on battery performance by the side reactions, such as decomposition of the electrolyte on the interface between the positive electrode and the electrolyte, consumption of active lithium, and intensification of dissolution of metal ions, through in-depth research, this application provides a secondary battery. An additive is added to an electrolyte of the secondary battery. The additive includes a silane additive. A positive electrode active material includes an active material core and a carbon material coating layer. An amount of the silane additive is determined based on a specific surface area of the positive electrode active material and a content of a carbon material in the positive electrode active material.

In this secondary battery, the silane additive in the additive of the electrolyte has a more appropriate oxidation potential than other additives. Oxygen-containing functional groups in the carbon material coating layer on the surface of the positive electrode active material preferentially react with the silane additive. Therefore, the silane additive is preferentially oxidized on a positive electrode into silane and a compound containing heteroatoms, forming a CEI film. In this way, side reactions catalyzed due to contact between active sites in the carbon material coating layer in the positive electrode active material and other components in the electrolyte are effectively avoided, and dissolution of metal ions from the positive electrode is suppressed, reducing battery impedance, improving battery cycle performance, and improving high-temperature performance. In addition, the amount of the silane additive is determined based on the specific surface area of the positive electrode active material and the content of the carbon material in the positive electrode active material. An appropriate amount of the required additive is determined based on physicochemical properties of the electrode material, thereby better ensuring electrochemical performance of the secondary battery. Moreover, during operation of the battery, the additive in the electrolyte may further form an SEI film on the surface of a negative electrode under the action of a reduction potential of the negative electrode, thereby better isolating the electrode material from the electrolyte, reducing side reactions between the electrode material and the electrolyte, suppressing dissolution, deposition, and reduction of metal ions from the electrode, and reducing irreversible consumption of active metal ions.

For ease of description in the following embodiments, embodiments of this application are described by using a secondary battery, a preparation method thereof, and use thereof as examples.

According to a first aspect, an embodiment of this application provides a secondary battery. The secondary battery includes a positive electrode 10, a negative electrode 20, a separator 30, and an electrolyte 40, where the positive electrode 10 includes a positive electrode active material 102, the positive electrode active material 102 includes an active material core and a carbon material coating layer, the electrolyte 40 includes an electrolyte salt, an organic solvent, and an additive, and the additive includes a silane additive, where an amount of the silane additive is determined based on a specific surface area of the positive electrode active material 102 and a content of a carbon material in the positive electrode active material 102.

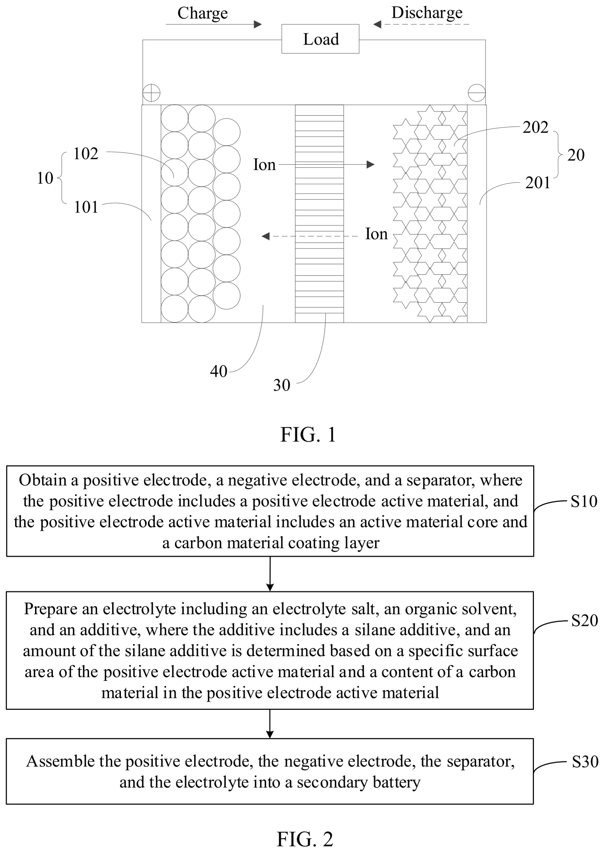

A structure of the secondary battery provided in an embodiment of this application includes at least the structure shown in FIG. 1. The secondary battery includes the positive electrode 10, the negative electrode 20, the separator 30, and the electrolyte 40. The separator 30 is disposed between the positive electrode 10 and the negative electrode 20. The electrolyte 40 fills space between the positive electrode 10 and the negative electrode 20, and the separator 30 is immersed in the electrolyte 40. During charging, metal ions deintercalate from the positive electrode active material 102 of the positive electrode, pass through the electrolyte 40 and the separator 30, and then intercalate into a negative electrode active material 202 of the negative electrode. During discharging, metal ions deintercalate from the negative electrode active material 202 of the negative electrode, pass through the electrolyte 40 and the separator 30, and then intercalate into the positive electrode active material 102.

In this way, the secondary battery provided in an embodiment of this application includes at least the following advantages.

First, the additive of the electrolyte 40 includes the silane additive, and the silane additive has a more appropriate oxidation potential than other additives. Therefore, in a process of initial charging and discharging of the battery, the silane additive can preferentially react with oxygen-containing functional groups and other active sites in the carbon material (namely, the carbon material coating layer) on the surface of the positive electrode active material 102 to be preferentially oxidized into silane and a compound containing heteroatoms, forming a CEI film on the surface of the positive electrode. Reactivity on the surface of the carbon material coating layer is passivated, and disordering of the carbon material coating layer is suppressed, thereby effectively avoiding side reactions catalyzed due to contact between the active sites in the carbon material coating layer in the positive electrode active material 102 and other components in the electrolyte 40. In addition, irreversible consumption of active metal ions is reduced, and a risk of blockage or structure collapse of a metal ion conducting channel of the carbon material coating layer in the positive electrode active material 102 is reduced, increasing an ordering degree of the carbon material coating layer, and ensuring metal ion transport. Moreover, dissolution of metal ions from the positive electrode 10 can be suppressed, reducing battery impedance, improving battery cycle performance, and improving high-temperature performance.

Second, because the silane additive in the electrolyte 40 of this application directly reacts with oxygen-containing functional groups and other active sites in the carbon material coating layer on the surface of the positive electrode active material 102 to form a CEI film, it can be learned that there is a direct relationship between the amount of the silane additive and physicochemical properties of the positive electrode active material 102, such as the specific surface area and the content of the carbon material coating layer on the surface. Therefore, in embodiments of this application, the amount of the silane additive is determined based on the specific surface area of the positive electrode active material 102 and the content of the carbon material (namely, the carbon material coating layer) in the positive electrode active material 102. An appropriate amount of the required additive is determined based on physicochemical properties of the electrode material, providing guidance for designing the matching of the electrode material and the electrolyte 40. This avoids problems such as failure to effectively reduce side reactions between the electrolyte 40 and the electrode material, and failure to reduce internal resistance that are caused by an inappropriate amount of the additive in the electrolyte 40, thereby better ensuring electrochemical performance of the secondary battery.

Third, during operation of the battery, the additive in the electrolyte 40 may further form an SEI film on the surface of the negative electrode under the action of a reduction potential of the negative electrode, to suppress formation of dendrites due to deposition and reduction of metal ions on the negative electrode to avoid damage to stability of the negative electrode structure and the SEI film. Therefore, the electrode material is better isolated from the electrolyte, reducing side reactions between the electrode material and the electrolyte, suppressing dissolution, deposition, and reduction of metal ions from the electrode, and reducing irreversible consumption of active metal ions.

In some possible implementations, in the secondary battery, a percentage by mass of the silane additive in the electrolyte 40 is denoted as $f$ (unit: %), the specific surface area of the positive electrode active material 102 is denoted as $a$ (unit: $m^2/g$), a percentage by mass of the carbon material in the positive electrode active material 102 is denoted as $e$ (unit: %), and $Z = f/(a*e)$ meets $0.001 \leq Z \leq 15$. In an embodiment of this application, in the relationship formula $Z = f/(a*e)$, $Z$ is only used to indicate a stoichiometric relationship among the percentage by mass of the silane additive and the specific surface area of the positive electrode active material 102 and the percentage by mass of the carbon material, and has no special meaning. When units of the parameters f, a, and e are determined, a value of Z is only related to the value and is not affected by the units of the parameters. In this case, because the silane additive has a more appropriate oxidation potential than other additives, in a process of initial charging and discharging of the battery, the silane additive preferentially reacts with oxygen-containing functional groups and other active sites in the carbon material on the surface of the positive electrode active material 102 to be preferentially oxidized into silane and a compound containing heteroatoms, forming a CEI film. Therefore, a larger specific surface area of the positive electrode active material 102 indicates more active sites and defects on the surface of the positive electrode active material 102. In addition, more carbon material layers applied on the surface of the positive electrode active material 102 indicate more oxygen-containing functional groups and other active sites and more defects in the carbon material. In this case, more silane additives are required for passivating reactivity on the surface of the carbon material coating layer. Therefore, an appropriate amount of the silane additive may be calculated based on the physicochemical properties of the positive electrode active material 102, such as the specific surface area and the content of the carbon material coating layer on the surface. Through specific research, it is found that, after the amount of the silane additive is determined based on the specific surface area of the positive electrode active material and the content of the carbon material in the positive electrode active material, in the secondary battery (including various stages such as pre-formation, post-formation, capacity grading, and post-cycling), a relationship among the percentage by mass f (unit: %) of the silane additive in the electrolyte 40 and the specific surface area a (unit: $m^2/g$) of the positive electrode active material 102 and the percentage by mass e (unit: %) of the carbon material on the surface of the positive electrode active material 102 is calculated according to $Z = f/(a*e)$, such that $0.001 \leq Z \leq 15$ is fulfilled. Under this condition, the electrode material and the electrolyte 40 in the battery have good matching effect, so that side reactions between the electrolyte 40 and the electrode material can be effectively reduced, impedance can be reduced, battery cycle performance can be improved, and battery high-temperature performance can be improved.

In a specific embodiment, in the secondary battery at various stages such as pre-formation, post-formation, capacity grading, and post-cycling, a relationship among the percentage by mass f (unit: %) of the silane additive in the electrolyte 40 and the specific surface area a (unit: $m^2/g$) of the positive electrode active material 102 and the percentage by mass e (unit: %) of the carbon material on the surface of the positive electrode active material 102 is calculated according to $Z = f/(a*e)$, such that $0.001 \leq Z \leq 15$ is fulfilled.

For example, the relationship among the percentage by mass f (unit: %) of the silane additive in the electrolyte 40 and the specific surface area a (unit: $m^2/g$) of the positive electrode active material 102 and the percentage by mass e (unit: %) of the carbon material on the surface of the positive electrode active material 102 is calculated according to $Z = f/(a*e)$, and Z meets 0.001 to 0.1, 0.1 to 0.2, 0.001 to 0.2, 0.02 to 15, 0.02 to 0.1, 0.1 to 0.5, 0.5 to 1, 1 to 2, 2 to 3, 3 to 4, 4 to 5, 5 to 6, 6 to 7, 7 to 8, 8 to 9, 9 to 10, 10 to 11, 11 to 12, 12 to 13, 13 to 14, 14 to 15, or the like.

In addition, it may be understood that, in an embodiment of this application, the relationship $Z = f/(a*e)$ among the percentage by mass f (unit: %) of the silane additive in the electrolyte 40 and the specific surface area a (unit: $m^2/g$) of the positive electrode active material 102 and the percentage by mass e (unit: %) of the carbon material on the surface of the positive electrode active material 102 is applicable to a battery assembly process, and is also applicable to pre- and post-formation, capacity grading, or post-cycle operation of the battery. In other words, after the battery undergoes formation, capacity grading, or cycle operation, the relationship $Z = f/(a*e)$ among the specific surface area a (unit: $m^2/g$) of the positive electrode active material and the content e (unit: %) of the carbon material coating layer and the content f (unit: %) of the silane additive still meets $0.001 \leq Z \leq 15$, and is still within a range limited in embodiments of this application. It should be noted that, after actual formation, capacity grading, or cycling of the battery, values of a, e, and f in the relationship formula are allowed to have specific measurement and testing errors because formation of an interface film affects material testing to some extent, and the values within an error range may be understood as a range limited in embodiments of this application.

In some possible implementations, the silane additive includes at least one of tris(trimethylsilyl)phosphate (TMSP), tris(trimethylsilyl)borate (TMSB), tris(trimethylsilyl)phosphite, tris(triethylsilyl)phosphate, tris(triethylsilyl)borate, tris(triethylsilyl)phosphite, tris(trifluoromethylsilyl)phosphate, tris(trifluoromethylsilyl)borate, tris(trifluoromethylsilyl)phosphite, tris(trifluoroethylsilyl)phosphate, tris(trifluoroethylsilyl)borate, and tris(trifluoroethylsilyl)phosphite. In this case, these silane additives have a more appropriate oxidation potential than other additives. In a process of initial charging and discharging of the battery, the silane additive preferentially reacts with oxygen-containing functional groups and other active sites in the carbon material on the surface of the positive electrode active material 102, passivating reactivity on the surface of the carbon material coating layer, and suppressing disordering of the carbon material coating layer, and is preferentially oxidized into silane and a compound containing heteroatoms such as phosphorus and boron, forming a CEI film on the surface of the positive electrode. According to an aspect, the CEI film can effectively avoid side reactions catalyzed due to contact between active sites in the carbon material coating layer in the positive electrode active material 102 and other components in the electrolyte 40, reduce irreversible consumption of active metal ions, and maintain a structure of a metal ion conducting channel of the carbon material coating layer, and can further suppress dissolution of metal ions from the positive electrode 10, reducing battery impedance, improving battery cycle performance, and improving high-temperature performance. According to another aspect, the compound containing heteroatoms such as phosphorus and boron in the CEI film has high conductivity. This can improve conductivity of the CEI film, facilitate lithium ion transport, and better improve cycle performance, safety performance, and other characteristics of the battery.

In some possible implementations, the percentage by mass of the silane additive in the electrolyte 40 is 0.01% to 1.0%. The silane additive with this addition content can fully passivate reaction active sites and defects on the surface of the carbon material coating layer, and form a CEI film on the surface of the positive electrode, better reducing disordering of the carbon material coating layer, improving ion transport efficiency, reducing side reactions between the electrolyte 40 and the positive electrode material, reducing irreversible consumption of active metal ions, maintaining a structure of a metal ion conducting channel of the carbon material coating layer, and suppressing dissolution of metal ions from the positive electrode 10, thereby reducing battery impedance, improving battery cycle performance and safety performance, and improving high-temperature performance. In addition, the content of the silane additive allows the CEI film formed on the surface of the positive electrode to have an appropriate thickness. This can effectively reduce side reactions between the positive electrode material and the electrolyte 40, improve battery cycle safety performance, and avoid an impact of an excessively thick CEI film on battery impedance. For example, the percentage by mass of the silane additive in the electrolyte 40 may be 0.01% to 0.05%, 0.05% to 0.1%, 0.1% to 0.2%, 0.2% to 0.3%, 0.3% to 0.4%, 0.4% to 0.5%, 0.5% to 0.6%, 0.6% to 0.7%, 0.7% to 0.8%, 0.8% to 0.9%, 0.9% to 1.0%, or the like. In a specific embodiment, the percentage by mass of the silane additive in the electrolyte 40 may be typically, but is not limited to, 0.01%, 0.05%, 0.1%, 0.2%, 0.5%, 0.7%, 0.9%, 1.0%, or any value between 0.01% and 1.0%.

In some possible implementations, the percentage by mass of the carbon material in the positive electrode active material 102 is 0.5% to 5%. In this case, the content of the carbon material coating layer in the positive electrode active material 102 can ensure that the active material core is fully and completely coated, improving conductivity of the active material core, helping reduce internal resistance and polarization, and improving a cycle life, fast charging performance, energy efficiency, and other characteristics of the battery. In addition, the content of the carbon material coating layer also avoids risks such as reduced capacity of the positive electrode active material 102, reduced coulombic efficiency, increased carrier migration and transport paths, increased impedance, and increased side reactions that are caused due to excessive introduction of the carbon material. For example, the percentage by mass of the carbon material in the positive electrode active material 102 may be 0.5% to 1.0%, 1.0% to 1.5%, 1.5% to 2%, 2% to 2.5%, 2.5% to 3%, 3% to 3.5%, 3.5% to 4%, 4% to 4.5%, 4.5% to 5%, or the like.

In some possible implementations, the specific surface area of the positive electrode active material 102 is 0.1 $m^2/g$ to 20 $m^2/g$. In this case, a larger specific surface area of the positive electrode active material 102 is more conducive to ion intercalation and deintercalation, helping improve rate performance of the battery. However, a larger specific surface area of the positive electrode active material 102 indicates more side reactions between the positive electrode active material 102 and the electrolyte 40. This is not conducive to improving coulombic efficiency of the battery. Therefore, in embodiments of this application, this specific surface area of the positive electrode active material 102 ensures a large specific surface area of deintercalation activity of ions in a process of charging and discharging of the battery, and helps control side reactions between the positive electrode active material 102 and the electrolyte 40. For example, the specific surface area of the positive electrode active material 102 may be 0.1 $m^2/g$ to 1 $m^2/g$, 0.2 $m^2/g$ to 0.8 $m^2/g$, 0.1 $m^2/g$ to 0.2 $m^2/g$, 0.2 $m^2/g$ to 0.3 $m^2/g$, 0.3 $m^2/g$ to 0.4 $m^2/g$, 0.4 $m^2/g$ to 0.5 $m^2/g$, 0.5 $m^2/g$ to 0.6 $m^2/g$, 0.6 $m^2/g$ to 0.7 $m^2/g$, 0.7 $m^2/g$ to 0.8 $m^2/g$, 0.8 $m^2/g$ to 0.9 $m^2/g$, 0.9 $m^2/g$ to 1.0 $m^2/g$, 1.0 $m^2/g$ to 2 $m^2/g$, 2 $m^2/g$ to 3 $m^2/g$, $m^2/g$ to 4 $m^2/g$, 4 $m^2/g$ to 5 $m^2/g$, 5 $m^2/g$ to 6 $m^2/g$, 6 $m^2/g$ to 7 $m^2/g$, 7 $m^2/g$ to 8 $m^2/g$, 8 $m^2/g$ to 9 $m^2/g$, 9 $m^2/g$ to 10 $m^2/g$, 10 $m^2/g$ to 11 $m^2/g$, 11 $m^2/g$ to 12 $m^2/g$, 12 $m^2/g$ to 13 $m^2/g$, 13 $m^2/g$ to 14 $m^2/g$, 14 $m^2/g$ to 15 $m^2/g$, 15 $m^2/g$ to 16 $m^2/g$, 16 $m^2/g$ to 17 $m^2/g$, 17 $m^2/g$ to 18 $m^2/g$, 18 $m^2/g$ to 19 $m^2/g$, 19 $m^2/g$ to 20 $m^2/g$, or the like.

In some possible implementations, the active material core includes at least one of a metal oxide and a polyanionic salt. In this case, these active materials included in the core of the positive electrode active material 102 have high capacity and safety, and other characteristics.

In some possible implementations, the metal oxide includes at least one of lithium cobaltate, lithium nickelate, lithium nickel cobalt manganese oxide, lithium nickel cobalt aluminum oxide, lithium manganate, lithium nickel manganese oxide, and lithium vanadate. Lithium cobaltate ($LiCoO_2$), lithium manganate ($LiMnO_2$), and lithium nickelate ($LiNiO_2$) are all of an $\alpha$-NaFeO$_2$ crystal structure and belong to a hexagonal crystal system. From the perspective of the crystal structure, a Li-O octahedron and an M-O octahedron (M is a transition metal element) are alternated layer by layer and stacked with each other. Therefore, these materials are also referred to as layered positive electrode materials. Lithium cobaltate (LCO) has advantages of a high discharge plateau, high specific capacity, good cycle performance, a simple synthesis process, and the like. Lithium cobaltate is especially applicable to small-sized batteries, for example, used in digital products such as mobile phones, aircraft models, vehicle models, electronic cigarettes, and smart wearables, and meets market development requirements of intelligence, lightening, thinning, and miniaturization. Compared with lithium cobaltate and other conventional positive electrode materials, lithium manganate ($LiMnO_2$) has advantages of abundant resources, low costs, no pollution, good safety, good rate performance, and the like, and is an ideal positive electrode material for a power battery. However, lithium manganate of a layered structure is a non-thermally stable phase, and lithium manganate of a spinel structure has advantages of good structural stability, high power density, and the like. Compared with lithium cobaltate and lithium manganate, lithium nickelate ($LiNiO_2$) can reach higher actual capacity. In addition, the nickel element has great application potential due to advantages of abundant resources, low price, and the like. Lithium vanadate has unique advantages of high specific capacity (up to about 300 mAh/g) and low price. As a conventional positive electrode material of a lithium-ion battery, lithium nickel cobalt manganese oxide that has been widely studied replaces two thirds or more of cobalt in lithium cobaltate with relatively cheap nickel and manganese, and therefore has higher specific capacity and lower costs than a single-element positive electrode material. Compared with other positive electrode materials of lithium-ion batteries: lithium manganate and lithium iron(II) phosphate, lithium nickel cobalt manganese oxide and lithium cobaltate are very close to each other in terms of electrochemical performance and processing performance, so that lithium nickel cobalt manganese oxide becomes a new battery material and gradually replaces lithium cobaltate to become a next-generation lithium-ion battery material. As a high-nickel ternary material, lithium nickel cobalt aluminum oxide (NCA) has characteristics of high specific capacity (up to 200 mAh/g), low price, good cycle stability, and the like. The active material lithium nickel manganese oxide is usually of a spinel structure, and is developed based on lithium manganate of a spinel structure. Like lithium manganate, the lithium nickel manganese oxide is a positive electrode material having a three-dimensional lithium ion channel, with a reversible capacity of 146.7 mAh/g, similar to that of lithium manganate, but with a voltage plateau of about 4.7 V, 15% higher than a voltage plateau of 4 V of lithium manganate, and with cycle stability at high temperatures improved significantly compared with the original lithium manganate.

In some possible implementations, the polyanionic salt includes at least one of lithium iron phosphate, lithium manganese phosphate, lithium manganese iron phosphate, lithium vanadium phosphate, lithium vanadyl phosphate, lithium cobalt phosphate, lithium nickel phosphate, lithium iron silicate, lithium iron fluorosulfate, lithium iron borate, and lithium iron titanate. In this case, the polyanionic salt core of the positive electrode active material has a stable polyhedral frame structure, having better structural and thermodynamic stability, so that higher cycle performance and safety can be obtained. The positive electrode material lithium iron phosphate is of an olivine structure, belongs to an orthorhombic crystal system, and has advantages of high reversible specific capacity (about 170.0 mAh/g), stable charge and discharge plateaus, high safety, a long cycle life, abundant resources, low price, and the like. Lithium manganese phosphate has high safety and stability that are similar to those of lithium iron phosphate, and has theoretical energy density 21% higher than that of lithium iron phosphate. Lithium manganese phosphate is considered as the most potential positive electrode material for next-generation lithium-ion power batteries. The manganese element is added to lithium iron phosphate to increase a voltage plateau, obtaining lithium manganese iron phosphate. Manganese ions (0.083 nm) and iron ions (0.078 nm) have similar ionic radiuses, and therefore can be mutually dissolved at any ratio. Therefore, the manganese element is added to lithium iron phosphate, and a ratio between a number of atoms of manganese and a number of atoms of iron (a ratio of manganese to iron) is adjusted, so that a high voltage plateau can be obtained, and inherent defects of lithium manganese phosphate can be avoided. Lithium vanadium phosphate has two crystal phases: a rhombohedral crystal phase and a monoclinic crystal phase that is more thermodynamically stable. Tetrahedral $PO_4$ and octahedral $VO_6$ are connected by sharing one vertex (oxygen atom), and form a three-dimensional mesh structure using $V_2(PO_4)_3$ as a structural unit. Lithium ions fill gaps in the three-dimensional structure. Therefore, lithium vanadium phosphate has good structural stability, a three-dimensional lithium ion diffusion channel, high specific capacity, high oxidation and reduction potentials, good large-current charge-discharge performance, and abundant raw materials, meeting requirements for power density in the lithium-ion battery industry. The existence of a P-O covalent bond in lithium vanadyl phosphate can improve dynamic and thermodynamic stability of lithium vanadyl phosphate, and can also weaken a V-O covalent bond (that is, inductive effect) and reduce antibonding orbital energy of vanadium ions, thereby improving oxidation and reduction energy levels of the vanadium ions, so that lithium vanadyl phosphate has a higher discharge plateau than vanadium oxide. Lithium cobalt phosphate inherits advantages of lithium iron phosphate, such as good safety, good cycle stability, and resistance to small-current float charging, and further greatly increases a voltage of the material. An operating voltage reaches 4.8 V, and energy density of the material reaches 800 Wh/kg. Lithium nickel phosphate has an advantage of high energy density. Two lithium ions can deintercalate from lithium iron silicate, with theoretical specific capacity up to 330 mAh/g. Lithium iron silicate has attracted attention due to high energy density. As a new-type sulfate polyanionic material, lithium iron fluorosulfate has outstanding advantages of low price, environmental protection, and the like, and has better high-rate safety than positive electrode materials such as the layered material lithium cobaltate and the spinel material lithium manganate. In addition, because the structure contains two lithium ions, theoretical capacity of lithium iron fluorosulfate is twice that of lithium iron phosphate. Lithium iron borate is a new-type polyanionic positive electrode material with high specific capacity. In terms of the structure, $(PO_4)^{3-}$ is replaced with $(BO_3)^{3-}$ with smaller molar mass, so that higher theoretical specific capacity (220 mAh/g) can be reached. In addition, this structure allows lithium iron borate to have better conductivity (the conductivity is $3.9\times10^{-7}$ S/cm), a small volume change rate (about 2%) before and after charging and discharging, good reversibility, and excellent chemical and electrochemical stability. Lithium iron titanate has theoretical capacity that can reach 295 mAh/g, a moderate operating voltage, wide sources of raw materials, low price, and is environmentally friendly, and is a positive electrode material that has just begun to be studied in recent years.

In some possible implementations, when the active material core includes the metal oxide, the specific surface area of the positive electrode active material 102 is 0.1 $m^2$/g to 1.0 $m^2$/g, such that $0.01 \leq Z \leq 15$ is fulfilled. Because the metal oxide active material has a relatively small specific surface area, when the active material core of the positive electrode active material 102 is the metal oxide, a corresponding specific surface area of the positive electrode active material 102 is also small, for example, 0.1 $m^2$/g to 1.0 $m^2$/g. In this case, in the relationship formula $Z = f/(a*e)$ of the percentage by mass f (unit: %) of the silane additive in the electrolyte 40 and the specific surface area a (unit: $m^2$/g) of the positive electrode active material 102 and the percentage by mass e (unit: %) of the carbon material on the surface of the positive electrode active material 102, Z meets $0.01 \leq Z \leq 15$. Under this condition, side reactions between the electrolyte 40 and the electrode material can be effectively reduced, impedance can be reduced, battery cycle performance can be improved, and battery high-temperature performance can be improved.

In some possible implementations, when the active material core includes the metal oxide, the specific surface area of the positive electrode active material 102 is 0.2 $m^2$/g to 0.8 $m^2$/g, such that $0.02 \leq Z \leq 10$ is fulfilled. In this case, side reactions between the electrolyte 40 and the electrode material can be more effectively reduced, impedance can be reduced, battery cycle performance can be improved, and battery high-temperature performance can be improved.

In some embodiments, when the active material core includes the metal oxide, the specific surface area of the positive electrode active material 102 may be 0.1 $m^2$/g to 1 $m^2$/g, 0.2 $m^2$/g to 1 $m^2$/g, 0.3 $m^2$/g to 1 $m^2$/g, 0.4 $m^2$/g to 1 $m^2$/g, 0.5 $m^2$/g to 1 $m^2$/g, 0.6 $m^2$/g to 1 $m^2$/g, 0.7 $m^2$/g to 1 $m^2$/g, 0.8 $m^2$/g to 1 $m^2$/g, 0.9 $m^2$/g to 1 $m^2$/g, 0.2 $m^2$/g to 0.9 $m^2$/g, 0.2 $m^2$/g to 0.8 $m^2$/g, 0.2 $m^2$/g to 0.7 $m^2$/g, 0.2 $m^2$/g to 0.6 $m^2$/g, 0.2 $m^2$/g to 0.5 $m^2$/g, 0.2 $m^2$/g to 0.4 $m^2$/g, 0.2 $m^2$/g to 0.3 $m^2$/g, or the like.

In some specific embodiments, when the active material core includes the metal oxide such as lithium cobaltate or lithium nickel cobalt manganese oxide, the specific surface area of the positive electrode active material 102 may be typically, but is not limited to, 0.1 $m^2$/g, 0.15 $m^2$/g, 0.2 $m^2$/g, 0.35 $m^2$/g, 0.5 $m^2$/g, 0.65 $m^2$/g, 0.8 $m^2$/g, or 1.0 $m^2$/g.

In some possible implementations, when the active material core includes the polyanionic salt, the specific surface area of the positive electrode active material 102 is 7 $m^2$/g to 20 $m^2$/g, such that $0.001 \leq Z \leq 0.2$ is fulfilled. Because the polyanionic salt active material usually has a polyhedral frame structure, the polyanionic salt active material has a relatively large specific surface area. When the active material core of the positive electrode active material 102 is the polyanionic salt, a corresponding specific surface area of the positive electrode active material 102 is also large, for example, 7 $m^2$/g to 20 $m^2$/g. In this case, in the relationship formula $Z = f/(a*e)$ of the percentage by mass f (unit: %) of the silane additive in the electrolyte 40 and the specific surface area a (unit: $m^2$/g) of the positive electrode active material 102 and the percentage by mass e (unit: %) of the carbon material on the surface of the positive electrode active material 102, Z meets $0.001 \leq Z \leq 0.2$. Under this condition, side reactions between the electrolyte 40 and the electrode material can be effectively reduced, impedance can be reduced, battery cycle performance can be improved, and battery high-temperature performance can be improved.

In some possible implementations, when the active material core includes the polyanionic salt, the specific surface area of the positive electrode active material 102 is 9 $m^2$/g to 15 $m^2$/g, such that $0.002 \leq Z \leq 0.1$ is fulfilled. In this case, side reactions between the electrolyte 40 and the electrode material can be more effectively reduced, impedance can be reduced, battery cycle performance can be improved, and battery high-temperature performance can be improved.

In some embodiments, when the active material core includes the polyanionic salt, the specific surface area of the positive electrode active material 102 may be 7 $m^2$/g to 20 $m^2$/g, 8 $m^2$/g to 19 $m^2$/g, 9 $m^2$/g to 18 $m^2$/g, 10 $m^2$/g to 17 $m^2$/g, 11 $m^2$/g to 16 $m^2$/g, 12 $m^2$/g to 15 $m^2$/g, 13 $m^2$/g to 14 $m^2$/g, 7 $m^2$/g to 10 $m^2$/g, 10 $m^2$/g to 13 $m^2$/g, 13 $m^2$/g to 15 $m^2$/g, 15 $m^2$/g to 18 $m^2$/g, 18 $m^2$/g to 20 $m^2$/g, 9 $m^2$/g to 15 $m^2$/g, 10 $m^2$/g to 14 $m^2$/g, 11 $m^2$/g to 13 $m^2$/g, or the like.

In some specific embodiments, when the active material core includes the phosphate polyanionic salt such as lithium iron phosphate, lithium manganese phosphate, or lithium manganese iron phosphate, the specific surface area of the positive electrode active material 102 may be typically, but is not limited to, 7 $m^2$/g, 9 $m^2$/g, 10 $m^2$/g, 12.5 $m^2$/g, 15 $m^2$/g, 18 $m^2$/g, or 20 $m^2$/g.

In some specific embodiments, when the active material core includes the lithium iron phosphate positive electrode active material 102, the specific surface area of the positive electrode active material 102 is 7 $m^2$/g to 20 $m^2$/g, and in the formula $Z = f/(a*e)$, Z meets $0.001 \leq Z \leq 0.2$. For example, Z may be a value between 0.001 and 0.01, or may be a value between 0.005 and 0.02, or may be a value between 0.01 and 0.05, or may be a value between 0.02 and 0.2, or may be a value between any two other values. For example, the value of Z may be typically, but is not limited to, 0.001, 0.005, 0.01, 0.02, 0.05, 0.1, 0.2, or any value between 0.001 and 0.2.

In some specific embodiments, when the active material core includes the lithium manganese iron phosphate positive electrode active material 102, the specific surface area of the positive electrode active material 102 is 7 $m^2$/g to 20 $m^2$/g, and in the formula $Z = f/(a*e)$, Z meets $0.001 \leq Z \leq 0.2$. For example, Z may be a value between 0.001 and 0.01, or may be a value between 0.005 and 0.02, or may be a value between 0.01 and 0.05, or may be a value between 0.02 and 0.2, or may be a value between any two other values. For example, the value of Z may be typically, but is not limited to, 0.001, 0.005, 0.01, 0.02, 0.05, 0.1, 0.2, or any value between 0.001 and 0.2.

In some specific embodiments, when the active material core includes the lithium cobaltate positive electrode active material 102, the specific surface area of the positive electrode active material 102 is 0.1 $m^2/g$ to 1.0 $m^2/g$, and in the formula $Z = f/(a*e)$, Z meets $0.01 \leq Z \leq 15$. For example, Z may be a value between 0.01 and 0.1, or may be a value between 0.05 and 0.5, or may be a value between 0.2 and 5, or may be a value between 1 and 15, or may be a value between any two other values. For example, the value of Z may be typically, but is not limited to, 0.02, 0.05, 0.1, 0.2, 0.5, 0.1, 0.2, 0.5, 1.0, 2.0, 5.0, 7.0, 10.0, 12.5, 15.0, or any value between 0.02 and 15.

In some specific embodiments, when the active material core includes the lithium nickel cobalt manganese oxide positive electrode active material 102, the specific surface area of the positive electrode active material 102 is 0.1 $m^2/g$ to 1.0 $m^2/g$, and in the formula $Z = f/(a*e)$, Z meets $0.01 \leq Z \leq 15$. For example, Z may be a value between 0.01 and 0.1, or may be a value between 0.05 and 0.5, or may be a value between 0.2 and 5, or may be a value between 1 and 15, or may be a value between any two other values. For example, the value of Z may be typically, but is not limited to, 0.02, 0.05, 0.1, 0.2, 0.5, 0.1, 0.2, 0.5, 1.0, 2.0, 5.0, 7.0, 10.0, 12.5, 15.0, or any value between 0.02 and 15.

In some possible implementations, a peak intensity ratio of a D peak to a G peak of the positive electrode active material 102 in a Raman test is $R = I_D/I_G$, and a value range of R is 0.6 to 1.3. In the Raman test, the D peak is a peak caused by defects of the carbon material coating layer on the surface of the positive electrode active material 102. If the material has more defects, the D peak is more apparent, and the intensity is greater. Larger $R = I_D/I_G$ indicates more defects, a lower degree of graphitization, and a higher degree of disordering of the carbon material coating layer. This is less conducive to ion migration and transport. In an embodiment of this application, the D peak in the Raman test is a peak in a shift range of 1300 $cm^{-1}$ to 1400 $cm^{-1}$ in a Raman spectrum of the positive electrode active material 102. A tip of the D peak appears near 1350 $cm^{-1}$, and is caused by a radial breathing mode of symmetric stretching vibration of sp2 carbon atoms in an aromatic ring (a structural defect). The G peak is a peak in a shift range of 1530 $cm^{-1}$ to 1630 $cm^{-1}$ in the Raman spectrum of the positive electrode active material 102. A tip of the G peak appears near 1580 $cm^{-1}$, and is caused by stretching vibration between sp2 carbon atoms. The G peak corresponds to vibration of E2g optical phonons in the center of the Brillouin zone (in-plane vibration of the carbon atoms). The D peak and the G peak respectively correspond to disordered carbon and ordered graphite carbon. Therefore, the intensity ratio ($I_D/I_G$) of the D peak to the G peak can reflect a degree of defects and a degree of graphitization of the carbon material. The positive electrode active material 102 with a value range of R being 0.6 to 1.3 ensures that there is an appropriate ion migration and transport channel in the carbon material coating layer on the surface. For example, the peak intensity ratio R of the D peak to the G peak in the Raman test of the positive electrode active material 102 may be 0.6 to 1.2, 0.6 to 1.1, 0.6 to 1.0, 0.6 to 0.9, 0.6 to 0.8, 0.6 to 0.7, 0.7 to 1.2, 0.8 to 1.2, 0.9 to 1.1, 0.7 to 1.0, 0.8 to 1, or the like.

In some possible implementations, the value range of the peak intensity ratio R of the D peak to the G peak of the positive electrode active material 102 in the Raman test is 0.8 to 1.2. In this case, the carbon material coating layer on the surface in the positive electrode active material 102 of the secondary battery can better improve conductivity of the core of the positive electrode active material and provide more appropriate ion migration and transport efficiency.

In addition, it may be understood that, after the battery undergoes formation, capacity grading, or cycle operation, the value range of the peak intensity ratio R of the D peak to the G peak of the positive electrode active material 102 in the Raman test is still 0.8 to 1.2, and is still within a range limited in embodiments of this application. It should be noted that, after actual formation, capacity grading, or cycle operation of the battery, a value of the peak intensity ratio R of the D peak to the G peak of the positive electrode active material 102 in the Raman test is allowed to have specific measurement and testing errors because formation of an interface film affects the carbon material coating layer on the surface of the positive electrode active material to some extent, and the values within an error range may be understood as a range limited in embodiments of this application.

In some possible implementations, the carbon material coating layer on the surface of the positive electrode active material 102 may be any carbon material such as amorphous carbon, carbon nanotubes, graphene, graphite, or carbon fibers.

In some possible implementations, the additive further includes vinylene carbonate. In this case, vinylene carbonate can undergo an electrochemical reaction on a surface of the negative electrode in a process of initial charging and discharging of the secondary battery to form a solid electrolyte interphase film, that is, an SEI film, effectively suppressing intercalation of solvent molecules and a swelling phenomenon of the battery, and improving capacity and a service life of the battery. Compared with other additives of the negative electrode, vinylene carbonate has better effect of formation of the SEI film on the surface of the negative electrode. In this case, the electrolyte 40 includes both a positive electrode film forming additive and a negative electrode film forming additive. During operation of the battery, the negative electrode film forming additive, for example, vinylene carbonate, in the electrolyte 40 forms an SEI film on the surface of the negative electrode under the action of a reduction potential of the negative electrode, isolating the negative electrode material from the electrolyte 40, to suppress formation of dendrites due to deposition and reduction of metal ions on the negative electrode to avoid damage to stability of the negative electrode structure and the SEI film. In addition, the positive electrode film forming additive, for example, the silane additive, forms a CEI film on the surface of the positive electrode under the action of an oxidation potential of the positive electrode, passivating active sites on the surface of the positive electrode, and suppressing dissolution of metal ions from the positive electrode material, thereby effectively reducing side reactions catalyzed due to contact between the electrolyte 40 and the positive electrode material.

In some possible implementations, a percentage by mass of the vinylene carbonate in the electrolyte 40 is 0.1% to 5%. In this case, vinylene carbonate in the percentage by mass of 0.1% to 5% in the electrolyte 40 fully ensures film forming effect of the vinylene carbonate on the surface of the negative electrode, forming an SEI film, isolating the negative electrode material from the electrolyte 40, and suppressing formation of dendrites due to deposition and reduction of metal ions on the negative electrode, to avoid damage to stability of the negative electrode structure and the SEI film. In addition, increased internal resistance of the battery due to formation of an excessively thick SEI is also avoided. For example, the percentage by mass of vinylene carbonate in the electrolyte 40 may be 0.1% to 0.5%, 0.5% to 1%, 1% to 2%, 2% to 3%, 3% to 4%, 4% to 5%, 2% to 3%, 3% to 5%, or the like. In a specific embodiment, the percentage by mass of vinylene carbonate in the electrolyte 40 may be typically, but is not limited to, 0.1%, 0.5%, 1%, 2%, 3%, 4%, or 5%.

In some possible implementations, the electrolyte salt includes at least one of $LiClO_4$, $LiBF_4$, $LiPF_6$, $LiAsF_6$, $LiCF_3SO_3$, LiTDI, $Li[(CF_3SO_2)_2N]$, $Li[(FSO_2)_2N]$, and $Li[(C_mF_{2m+1}SO_2)(C_nF_{2n+1}SO_2)N]$, where m and n are natural numbers. In this case, these electrolyte salts can ensure high ionic conductivity of the electrolyte 40, and do not undergo adverse side reactions with the electrode material, the electrolyte 40, the separator 30, and the like, providing good chemical stability. Lithium hexafluorophosphate $LiPF_6$ has appropriate solubility and high ionic conductivity in a non-aqueous solvent, and can form a stable passivation film on a surface of a current collector, for example, aluminum foil. In addition, lithium hexafluorophosphate can cooperate with a carbonate solvent to form a stable SEI film on the surface of the negative electrode. Compared with $LiPF_6$, lithium tetrafluoroborate $LiBF_4$ has a wider operating temperature range, better stability at high temperatures, and better performance at low temperatures. Lithium perchlorate $LiClO_4$ has relatively high solubility, and therefore exhibits relatively high ionic conductivity. The ionic conductivity of lithium perchlorate in a carbonate organic solvent at room temperature can reach 9 mS/cm, and an electrochemical stability window can reach 5.1 V vs. $Li^+/Li$. Lithium perchlorate has relatively good oxidation stability. This property also allows this electrolyte salt to match some high-voltage positive electrode materials, thereby providing high energy density of the lithium-ion battery. Lithium hexafluoroarsenate $LiAsF_6$ has the same ionic conductivity as $LiBF_4$. In this case, an electrochemical window can reach 6.3 V vs. $Li^+/Li$, achieving high electrochemical stability, and the lithium salt of the electrolyte is not corrosive to a current collector. In lithium 4,5-dicyano-2-(trifluoromethyl)imidazole LiTDI, the imidazole ring contributes to negative charge dissociation based on resonance effect, and the two nitrile groups are characterized by an optimized electronegativity/weight ratio, and can further promote positive charge dissociation. In addition, the $CF_3$ group is attached to the imidazole ring, and has electrochemical stability and extremely high thermal stability. This makes this molecule become the best choice for long-lasting lithium-ion batteries operating at high voltages and high temperatures. This extends a battery life and improves fast charging performance, and further resolves problems of purity and stability of high-capacity battery materials required by the battery. Lithium bis(fluorosulfonyl)imide $Li[(FSO_2)_2N]$ can effectively reduce high- and low-temperature resistance of an SEI layer, at low temperatures, formed on a surface of an electrode plate, and reduce a capacity loss of the lithium-ion battery during storage, thereby providing high battery capacity and electrochemical performance of the battery, and can also be used as an electrolyte for a primary battery. Lithium trifluoromethanesulfonate $LiCF_3SO_3$ has characteristics of excellent thermal stability, hydrolytic decomposability, cycle performance, and the like. The stable anions improve the structure and composition of a passivation layer on an interface between the electrolyte and the negative electrode material. This is conducive to stability of the electrolyte, the passivation film, and the electrode. Lithium bis(trifluoromethanesulfonyl)imide $Li[(CF_3SO_2)_2N]$ has high electrochemical stability and conductivity, and has a high voltage (4.2 V or higher). Asymmetric lithium bis(fluorosulfonyl)imide $Li[(C_mF_{2m+1}SO_2)(C_nF_{2n+1}SO_2)N]$ has moderate conductivity, high thermal stability, high electrochemical stability, a low probability of side reactions, and no corrosive gas, for example, HF.

In some possible implementations, a molar concentration of the electrolyte salt in the electrolyte 40 is 0.01 mol/L to 5.0 mol/L. In this case, the electrolyte salt with the molar concentration of 0.01 mol/L to 5.0 mol/L in the electrolyte 40 can ensure high ionic conductivity of the electrolyte 40. For example, the molar concentration of the electrolyte salt in the electrolyte 40 may be 0.01 mol/L to 0.05 mol/L, 0.05 mol/L to 0.1 mol/L, 0.1 mol/L to 0.3 mol/L, 0.3 mol/L to 0.5 mol/L, 0.5 mol/L to 0.8 mol/L, 0.8 mol/L to 1 mol/L, 1 mol/L to 2 mol/L, 2 mol/L to 3 mol/L, 3 mol/L to 4 mol/L, 4 mol/L to 5 mol/L, 2 mol/L to 4 mol/L, 3 mol/L to 5 mol/L, or the like. In a specific embodiment, the molar concentration of the electrolyte salt may be typically, but is not limited to, 0.01 mol/L, 0.1 mol/L, 0.5 mol/L, 0.8 mol/L, 1.0 mol/L, 1.2 mol/L, 1.5 mol/L, 1.8 mol/L, 2.0 mol/L, 3.0 mol/L, 4.0 mol/L, or 5.0 mol/L.

In some possible implementations, the organic solvent includes at least one of a carbonate solvent, an ether solvent, and a carboxylate solvent. The organic solvent is an important part of the electrolyte 40 of the battery, plays an important role in dissolving the electrolyte salt, the additive, and the like, and has an important impact on solubility of the electrolyte salt, conductivity of the electrolyte, cycle efficiency, reversible capacity, and safety of the battery. In this case, at least one of the organic solvents: the carbonate solvent, the ether solvent, and the carboxylate solvent allows the electrolyte salt to have good solubility, and has characteristics such as a low melting point, a high boiling point, a low vapor pressure, a wide operating temperature range, a high dielectric constant, low viscosity, and high conductivity. A low dielectric constant of ether solvent molecules allows ions to attract more solvent molecules in the ether electrolyte 40 and release the solvent molecules during desolvation, leading to a larger system entropy change and temperature coefficient. For example, the ether solvent includes chain ethers such as 1,2-dimethoxypropane (DMP), dimethoxymethane (DMM), and ethylene glycol dimethyl ether (DME), and ring ethers such as tetrahydrofuran (THF) and 2-methyltetrahydrofuran (2-Me-THF). The carbonate solvent includes ring carbonates such as propylene carbonate (PC) and ethylene carbonate (EC), and chain carbonates such as dimethyl carbonate (DMC), diethyl carbonate (DEC), and ethyl methyl carbonate (EMC). The ring carbonates EC, PC, and the like have a very high dielectric constant, making a lithium salt more easily dissolved, and also have very high viscosity, making a lithium ion migration rate low. The chain carbonates DMC, DEC, EMC, and the like have a small dielectric constant and a weak capability of dissolving a lithium salt, but have good fluidity due to low viscosity, facilitating lithium ion migration. In the carboxylate solvent, a ring carboxylate solvent, for example, γ-butyrolactone (BL), has a relatively wide liquid temperature range. Conductivity of the formed electrolyte 40 is similar to that of the electrolyte 40 with EC+PC. Like carbonate, the ring carboxylate solvent can also form a passivation film. However, BL is likely to decompose in water, has high toxicity, and has cycle efficiency much lower than that of a carbonate organic solvent, and therefore is rarely used in lithium-ion batteries. Linear carboxylates mainly include methyl formate (MF), methyl acetate (MA), methyl butyrate (MB), ethyl propionate (EP), and the like. These esters have an average solidification point 20°C to 30°C lower than that of carbonate, and have low viscosity, so that low-temperature performance of the electrolyte 40 can be improved.

In some possible implementations, the electrolyte 40 further includes an auxiliary additive including at least one of biphenyl, fluorobenzene, trifluoromethyl ethylene carbonate, fluoroethylene carbonate, difluoroethylene carbonate, vinyl ethylene carbonate, 1,3-propane sultone, 1,4-butane sultone, 1,3-propene sultone, ethylene sulfate, ethylene sulfite, methylene methanedisulfonate, butanedinitrile, hexanedinitrile, 1,2-bis(2-cyanoethoxy)ethane, 1,3,6-hexanetricarbonitrile, lithium bis(oxalato)borate, lithium difluoro(oxalato)borate, lithium difluorobis(oxalato)phosphate, and lithium difluorophosphate. In this case, the electrolyte 40 may further include the auxiliary additive. The addition of the auxiliary additive further improves stability of a CEI film and an SEI film, improves safety performance of the battery, controls contents of acid and water in the electrolyte 40, and improves conductivity and other performance of the electrolyte 40. Biphenyl can be used as an overcharge protection additive of the electrolyte 40. When an overcharge voltage is 4.5 V to 4.6 V, an oxidation electropolymerization reaction occurs, and an electropolymer is produced on the positive electrode of the battery, so that the battery voltage can be effectively maintained in a relatively safe range. Fluorine-containing additives such as fluorobenzene, trifluoromethyl ethylene carbonate, fluoroethylene carbonate, difluoroethylene carbonate, lithium difluoro(oxalato)borate, lithium difluorobis(oxalato)phosphate, and lithium difluorophosphate can effectively improve thermal stability of the battery, improve ionic conductivity, and improve low-temperature performance and other characteristics of the battery. Sulphate and sulfonate additives such as 1,3-propane sultone, 1,4-butane sultone, 1,3-propenyl thiolactone, ethylene sulfate, ethylene sulfite, and methylene methanedisulfonate can form high-quality interface films on both the positive and negative electrodes, and significantly improve performance of the lithium-ion battery. Nitrile additives such as butanedinitrile, hexanedinitrile, 1,2-bis(2-cyanoethoxy)ethane, and 1,3,6-hexanetricarbonitrile have good stability on the positive electrode and have strong oxidation resistance. In addition, the cyano groups have a strong coordination capability, and can be combined with active sites (for example, some metal ions with high valence states, such as nickel, cobalt, or manganese) on the surface of the electrode, to mask these active ions on the surface of the positive electrode, and reduce decomposition of the electrolyte 40 by the electrode. On the positive electrode, the nitrile additive is stable and can complex some active ions, without forming a surface film with high impedance. Therefore, the nitrile can enhance a capability of resistance to oxidation on the positive electrode by the electrolyte 40, thereby increasing a cycle life of the electrolyte 40 at high voltages. When boron-containing additives such as lithium bis(oxalato)borate and lithium difluoro(oxalato)borate are used in lithium-ion batteries with different positive electrode materials, a protection film can be formed on the surface of the positive electrode during cycling of the battery to stabilize an interface between the electrode and the electrolyte 40, thereby improving battery performance.

In some possible implementations, the secondary battery includes a lithium-ion battery. The lithium-ion battery is a rechargeable battery that uses graphite or another carbon material as a negative electrode and uses a lithium-containing compound as a positive electrode. The lithium-ion battery is a battery that uses a lithium metal or lithium alloy as a positive/negative electrode material and uses a non-aqueous electrolyte solution. The lithium-ion battery is essentially a battery with a concentration difference. The positive and negative electrode materials have different electrochemical potentials, and are separated by the separator 30 in the middle. $Li^+$ moves from an electrode of an intercalation material with a high chemical potential to an electrode with a low potential. Only lithium ions can pass through the separator 30 and move in the electrolyte 40. Charge compensation electrons can move only through an external circuit to form a current for output. In a discharge process, lithium ions in a fully charged lithium-ion battery intercalate into an anode material. An anode (negative electrode) has many micropores, and the lithium ions intercalate into the micropores of the negative electrode. During discharging, $Li^+$ moves from the anode to a cathode through the separator 30, and electrons cannot pass through the separator 30, but can move from the negative electrode to a positive electrode only through an external circuit. The electrons are negatively charged, an electron direction is from the negative electrode to the positive electrode, and a current direction is from the positive electrode to the negative electrode. In a charge process, when the battery is charged, lithium ions are generated on the cathode of the battery, and the generated lithium ions move to the anode through the electrolyte 40. The anode has many micropores, and the lithium ions that reach the anode intercalate into the micropores of the anode. More intercalated lithium ions indicate higher charge capacity. Therefore, the lithium-ion battery operates mainly relying on the movement of lithium ions between the positive electrode 10 and the negative electrode 20. During charging and discharging, $Li^+$ moves between the two electrodes for intercalation and deintercalation. During charging, $Li^+$ deintercalates from the positive electrode and intercalates into the negative electrode through the electrolyte, and the negative electrode is in a lithium-rich state. During discharging, $Li^+$ deintercalates from the negative electrode and intercalates into the positive electrode through the electrolyte, and the positive electrode is in a lithium-rich state.

In some possible implementations, the negative electrode 20 includes a negative electrode active material 202 including at least one of a carbon-based negative electrode material, a silicon-based negative electrode material, and lithium titanate. The negative electrode active material 202 of the battery provides a function of energy storage and release in the secondary battery, and mainly affects initial efficiency, cycle performance, and the like of the battery. The negative electrode active material 202 may be divided based on different negative electrode active substances into two types: a carbon negative electrode material and a non-carbon negative electrode material. The carbon material may be divided into graphite (for example, commercial graphite G49, AML906, and QCG-H2), hard carbon, soft carbon, graphene, and other carbon-based negative electrode materials. The graphite negative electrode material may be further divided into natural graphite, artificial graphite, composite graphite, and intermediate-phase carbon microspheres. Natural graphite and artificial graphite are most widely used. The non-carbon material is divided into a silicon-based negative electrode material, lithium titanate, and other non-carbon materials. The silicon-based negative electrode material includes monoatomic silicon, a compound formed by silicon and a nonmetal, a compound formed by silicon and a metal, and the like.

In some possible implementations, the secondary battery includes at least one of a cell, a battery module, and a battery pack. The cell is a single electrochemical cell with positive and negative electrodes. The cell is a minimum unit of a power battery and is also an electric energy storage unit. Components of the cell include four main parts: a positive electrode 10, a negative electrode 20, an electrolyte 40, and a separator 30. The battery module means that a plurality of cells are packaged together by a same shell frame to form a module when being connected to the outside through a unified boundary. The battery pack means that several cells or battery modules are controlled or managed together by a battery management system BMS and a thermal management system to form a unified whole. This unified whole is called a battery pack.

In some possible implementations, a shape of the cell is not particularly limited in embodiments of this application, and may be cylindrical, square, or any other shape.

In some embodiments, outer packaging of the cell may include a housing and a cover plate. A positive electrode plate, a negative electrode plate, and a separator may be wound and/or laminated to form an electrode assembly. The electrode assembly is packaged in an accommodating cavity. The electrode assembly is immersed in the electrolyte 40. There may be one or more electrode assemblies included in the cell, and a quantity may be adjusted as required. The composite separator 30 in the foregoing embodiments is disposed between the positive electrode plate and the negative electrode plate.

In some possible implementations, the cell according to this application may be assembled into a battery module. There may be a plurality of cells included in the battery module, and a specific quantity may be adjusted based on application and capacity of the battery module. In the battery module, a plurality of cells may be sequentially arranged in a length direction of the battery module. Certainly, the plurality of cells may alternatively be arranged in any other manner.

In some possible implementations, the battery module may further include an outer shell with accommodating space, and the plurality of cells are accommodated in the accommodating space.

In some possible implementations, the cell and/or battery module may be further assembled into a battery pack, and a quantity of cells or battery modules included in the battery pack may be adjusted based on application and capacity of the battery pack.

In some possible implementations, the battery pack may include a battery box and a plurality of battery modules disposed in the battery box. The plurality of battery modules may be arranged in the battery box in any manner.

The secondary battery in the foregoing embodiments of this application may be obtained by using a method in the following embodiment.

According to a second aspect, as shown in FIG. 2, an embodiment of this application provides a method for preparing a secondary battery, including the following steps.

S10: Obtain a positive electrode 10, a negative electrode 20, and a separator 30, where the positive electrode 10 includes a positive electrode active material 102, and the positive electrode active material 102 includes an active material core and a carbon material coating layer.

S20: Prepare an electrolyte 40 including an electrolyte salt, an organic solvent, and an additive, where the additive includes a silane additive, and an amount of the silane additive is determined based on a specific surface area of the positive electrode active material 102 and a content of a carbon material in the positive electrode active material 102.

S30: Assemble the positive electrode 10, the negative electrode 20, the separator 30, and the electrolyte 40 into the secondary battery.

In this case, according to the method for preparing the secondary battery provided in an embodiment of this application, the electrolyte 40 including the electrolyte salt, the organic solvent, and the additive is prepared and then assembled with the positive electrode 10, the negative electrode 20, and the separator 30 to obtain the secondary battery. The electrolyte includes the silane additive whose amount is determined based on the specific surface area of the positive electrode active material and the content of the carbon material in the positive electrode active material. According to an aspect, the silane additive can preferentially react with oxygen-containing functional groups and other active sites in the carbon material on the surface of the positive electrode active material 102, and preferentially form a CEI film on the surface of the positive electrode, passivating reactivity on the surface of the carbon material coating layer, reducing irreversible consumption of active metal ions, suppressing disordering of the carbon material coating layer, and ensuring a metal ion transport channel, thereby improving battery cycle performance. According to another aspect, an appropriate amount of the required additive is determined based on physicochemical properties of the electrode material, avoiding problems such as failure to effectively reduce side reactions between the electrolyte 40 and the electrode material, and failure to reduce internal resistance that are caused by an inappropriate amount of the additive in the electrolyte 40, thereby better ensuring electrochemical performance of the secondary battery.

In step S10, the positive electrode 10, the negative electrode 20, and the separator 30 are obtained. The positive electrode 10 includes the positive electrode active material 102, and the positive electrode active material 102 includes the active material core and the carbon material coating layer. The positive electrode 10, the negative electrode 20, and the separator 30 may be directly purchased through commercial means or prepared with reference to methods known in the art.

In some possible implementations, the negative electrode 20 includes a negative electrode current collector 201 and a negative electrode material layer applied on a surface of the negative electrode current collector 201. In addition to a negative electrode active material 202, the negative electrode material layer may further include specific amounts of a binder, a conductive agent, and other components.

In some possible implementations, the negative electrode active material 202 is a carbon-based material that can receive and release lithium ions, including but not limited to: graphite (for example, commercial graphite G49, AML906, and QCG-H2), soft carbon (for example, coke), hard carbon, and other carbon-based negative electrode materials, or is a silicon-based negative electrode material such as monoatomic silicon, a compound formed by silicon and a nonmetal, and a compound formed by silicon and a metal, or is lithium titanate or another negative electrode active material 202. This is merely an example for description, and is not specifically limited herein.

In some possible implementations, the negative electrode current collector 201 may be metal foil, such as copper foil, gold foil, or platinum foil. This is merely an example for description, and is not specifically limited herein.

In some possible implementations, the binder may be typically, but is not limited to, sodium carboxymethylcellulose (CMC-Na), styrene butadiene rubber (SBR), polyacrylic acid (PAA), or lithium polyacrylate (LiPAA). This is merely an example for description, and is not specifically limited herein.

In some possible implementations, the conductive agent may be typically, but is not limited to, amorphous carbon, carbon nanotubes, carbon fibers, or graphene. This is merely an example for description, and is not specifically limited herein.

In some possible implementations, preparation of the negative electrode 20 includes the following steps. The negative electrode active material 202, the conductive agent such as conductive carbon black, the binder such as carboxymethylcellulose and styrene butadiene rubber, water, and other solvents are prepared at a mass ratio of (80-99):(1-5):(2-10):100 into a mixed negative electrode slurry, and then the mixed negative electrode slurry is defoamed under vacuum and then output to obtain a material. The material is applied on a coating machine and is subjected to roller pressing, slitting, and die cutting, to obtain the negative electrode 20.

In some possible implementations, the positive electrode 10 includes a positive electrode current collector 101 and a positive electrode material layer applied on a surface of the positive electrode current collector 101. In addition to a positive electrode active material 102, the positive electrode material layer may further include specific amounts of a binder, a conductive agent, and other components.

In some possible implementations, the positive electrode active material 102 in the positive electrode 10 includes the active material core and the carbon material coating layer. In this case, the carbon material coating layer can improve conductivity of the active material core, help reduce internal resistance and polarization, and improve a cycle life, fast charging performance, energy efficiency, and other characteristics of the battery.

In some possible implementations, the percentage by mass of the carbon material in the positive electrode active material 102 is 0.5% to 5%. In this case, the content of the carbon material coating layer in the positive electrode active material 102 can ensure that the active material core is fully and completely coated, improving conductivity of the active material core, helping reduce internal resistance and polarization, and improving a cycle life, fast charging performance, energy efficiency, and other characteristics of the battery.

In some possible implementations, the active material core includes at least one of a metal oxide and a polyanionic salt. In some specific embodiments, the metal oxide includes at least one of lithium cobaltate, lithium nickelate, lithium nickel cobalt manganese oxide, lithium nickel cobalt aluminum oxide, lithium manganate, lithium nickel manganese oxide, and lithium vanadate. In some specific embodiments, the polyanionic salt includes at least one of lithium iron phosphate, lithium manganese phosphate, lithium manganese iron phosphate, lithium vanadium phosphate, lithium vanadyl phosphate, lithium cobalt phosphate, lithium nickel phosphate, lithium iron silicate, lithium iron fluorosulfate, lithium iron borate, and lithium iron titanate. In this case, these active materials included in the core of the positive electrode active material 102 have high capacity and safety, and other characteristics.

In some possible implementations, the specific surface area of the positive electrode active material 102 is 0.1 $m^2/g$ to 20 $m^2/g$. In this case, this specific surface area of the positive electrode active material 102 ensures a large specific surface area of deintercalation activity of ions in a process of charging and discharging of the battery, and helps control side reactions between the positive electrode active material 102 and the electrolyte 40.

In some possible implementations, the positive electrode current collector 101 may be metal foil, such as aluminum foil, gold foil, or platinum foil. This is merely an example for description, and is not specifically limited herein.

In some possible implementations, the binder may be typically, but is not limited to, polyvinylidene fluoride (PVDF), an acrylonitrile multipolymer, polyacrylic acid, or hydroxypropyl methyl cellulose. This is merely an example for description, and is not specifically limited herein.

In some possible implementations, the conductive agent may be typically, but is not limited to, amorphous carbon, carbon nanotubes, carbon fibers, or graphene. This is merely an example for description, and is not specifically limited herein.

In some possible implementations, preparation of the positive electrode 10 includes the following steps. The positive electrode active material 102, the conductive agent such as conductive carbon black, the binder such as polyvinylidene fluoride, N-methylpyrrolidone, and other solvents are prepared at a mass ratio of (80-99):(1-5):(2-10):100 into a mixed positive electrode slurry, and then the mixed positive electrode slurry is defoamed under vacuum and then output to obtain a material. The material is applied on a coating machine and is subjected to roller pressing, slitting, and die cutting, to obtain the positive electrode 10.

In some possible implementations, in the secondary battery, the separator 30 can block electrons but allow ions to pass through. For example, the separator 30 includes, but is not limited to, single-layer polypropylene (polypropylene, PP), single-layer polyethylene (polyethylene, PE), double-layer PP/PE, double-layer PP/PP, three-layer PP/PE/PP, ceramic-coated PE, and another separator 30.

In S20, the electrolyte 40 including the electrolyte salt, the organic solvent, and the additive is prepared. The additive includes the silane additive, and the amount of the silane additive is determined based on the specific surface area of the positive electrode active material 102 and the content of the carbon material in the positive electrode active material 102. A preparation step of the electrolyte 40 typically includes, but is not limited to: preparing the electrolyte salt, the organic solvent, and the additive into a mixed solution, to obtain the electrolyte 40.

In some possible implementations, in the secondary battery, a percentage by mass of the silane additive in the electrolyte 40 is denoted as f (unit: %), the specific surface area of the positive electrode active material 102 is denoted as a (unit: $m^2/g$), a percentage by mass of the carbon material in the positive electrode active material 102 is denoted as e (unit: %), and $Z = f/(a*e)$ meets $0.001 \leq Z \leq 15$. In an embodiment of this application, in the relationship formula $Z = f/(a*e)$, when units of the parameters f, a, and e are determined, a value of Z is only related to the value and is not affected by the units of the parameters. In this case, after the amount of the silane additive is determined based on the specific surface area of the positive electrode active material and the content of the carbon material in the positive electrode active material, in the secondary battery at various stages such as pre-formation, post-formation, capacity grading, and post-cycling, a relationship among the percentage by mass f (unit: %) of the silane additive in the electrolyte 40 and the specific surface area a (unit: $m^2/g$) of the positive electrode active material 102 and the percentage by mass e (unit: %) of the carbon material on the surface of the positive electrode active material 102 is calculated according to $Z = f/(a*e)$, such that $0.001 \leq Z \leq 15$ is fulfilled. Under this condition, the electrode material and the electrolyte 40 have good matching effect, so that side reactions between the electrolyte 40 and the electrode material can be effectively reduced, impedance can be reduced, battery cycle performance can be improved, and battery high-temperature performance can be improved.

In some possible implementations, the silane additive includes at least one of tris(trimethylsilyl)phosphate (TMSP), tris(trimethylsilyl)borate (TMSB), tris(trimethylsilyl)phosphite, tris(triethylsilyl)phosphate, tris(triethylsilyl)borate, tris(triethylsilyl)phosphite, tris(trifluoromethylsilyl)phosphate, tris(trifluoromethylsilyl)borate, tris(trifluoromethylsilyl) phosphite, tris(trifluoroethylsilyl)phosphate, tris(trifluoroethylsilyl)borate, and tris(trifluoroethylsilyl)phosphite. In this case, these silane additives have a more appropriate oxidation potential than other additives. In a process of initial charging and discharging of the battery, the silane additive preferentially reacts with oxygen-containing functional groups and other active sites in the carbon material on the surface of the positive electrode active material 102, passivating reactivity on the surface of the carbon material coating layer, and suppressing disordering of the carbon material coating

layer, and is preferably oxidized into silane and a compound containing heteroatoms such as phosphorus and boron, forming a CEI film on the surface of the positive electrode.

In some possible implementations, the percentage by mass of the silane additive in the electrolyte 40 is 0.01% to 1.0%. In this case, the content of the silane additive allows the CEI film formed on the surface of the positive electrode to have an appropriate thickness. This can effectively reduce side reactions between the positive electrode material and the electrolyte 40, improve battery cycle safety performance, and avoid an impact of an excessively thick CEI film on battery impedance.

In some possible implementations, the additive further includes vinylene carbonate. Compared with other additives of the negative electrode, vinylene carbonate has better effect of formation of the SEI film on the surface of the negative electrode. In this case, vinylene carbonate can undergo an electrochemical reaction on a surface of the negative electrode in a process of initial charging and discharging of the secondary battery to form a solid electrolyte interphase film, that is, an SEI film, effectively suppressing intercalation of solvent molecules and a swelling phenomenon of the battery, and improving capacity and a service life of the battery.

In some possible implementations, a percentage by mass of the vinylene carbonate in the electrolyte 40 is 0.1% to 5%. In this case, vinylene carbonate fully ensures film forming effect of the vinylene carbonate on the surface of the negative electrode, forming an SEI film, isolating the negative electrode material from the electrolyte 40, and suppressing formation of dendrites due to deposition and reduction of metal ions on the negative electrode, to avoid damage to stability of the negative electrode structure and the SEI film.

In some possible implementations, the electrolyte salt includes at least one of $LiClO_4$, $LiBF_4$, $LiPF_6$, $LiAsF_6$, $LiCF_3SO_3$, LiTDI, $Li[(CF_3SO_2)_2N]$, $Li[(FSO_2)_2N]$, and $Li[(C_mF_{2m+1}SO_2)(C_nF_{2n+1}SO_2)N]$, where m and n are natural numbers. In this case, these electrolyte salts can ensure high ionic conductivity of the electrolyte 40, and do not undergo adverse side reactions with the electrode material, the electrolyte 40, the separator 30, and the like, providing good chemical stability.

In some possible implementations, a molar concentration of the electrolyte salt in the electrolyte 40 is 0.01 mol/L to 5.0 mol/L. In this case, the concentration of the electrolyte salt can ensure high ionic conductivity of the electrolyte 40.

In some possible implementations, the organic solvent includes at least one of a carbonate solvent, an ether solvent, and a carboxylate solvent. In this case, these organic solvents allow the electrolyte salt to have good solubility, and have characteristics such as a low melting point, a high boiling point, a low vapor pressure, a wide operating temperature range, a high dielectric constant, low viscosity, and high conductivity. The carbonate solvent includes, but is not limited to, dimethyl carbonate, ethyl methyl carbonate, diethyl carbonate, ethylene carbonate, propylene carbonate, trifluoromethyl ethylene carbonate, bis(2,2,2-trifluoroethyl) carbonate, and (2,2,2-trifluoroethyl) methyl carbonate. The ether solvent includes, but is not limited to, tetrahydrofuran, 2-methyltetrahydrofuran, 1,3-dioxolane, dimethoxymethane, 1,2-dimethoxyethane, diethylene glycol dimethyl ether, 1,1,2,2-tetrafluoroethyl-2,2,3,3-tetrafluoropropylether, and bis(2,2,2-trifluoroethyl) ether. The carboxylate solvent includes, but is not limited to, methyl formate, ethyl formate, ethyl acetate, propyl acetate, propyl propionate, methyl difluoroacetate, and methyl trifluoroacetate.

In some possible implementations, the electrolyte 40 further includes an auxiliary additive including at least one of biphenyl, fluorobenzene, trifluoromethyl ethylene carbonate, fluoroethylene carbonate, difluoroethylene carbonate, vinyl ethylene carbonate, 1,3-propane sultone, 1,4-butane sultone, 1,3-propene sultone, ethylene sulfate, ethylene sulfite, methylene methanedisulfonate, butanedinitrile, hexanedinitrile, 1,2-bis(2-cyanoethoxy)ethane, 1,3,6-hexanetricarbonitrile, lithium bis(oxalato)borate, lithium difluoro(oxalato)borate, lithium difluorobis(oxalato)phosphate, and lithium difluorophosphate.

In step S30, a method for assembling the positive electrode 10, the negative electrode 20, the separator 30, and the electrolyte 40 into the secondary battery includes, but is not limited to: preparing the positive electrode 10, the negative electrode 20, and the separator 30 into a pole core according to a conventional process, coating the periphery and bottom of the pole core with an insulating film, fastening the insulating film to the pole core with adhesive tape, assembling the pole core into a housing, sealing the housing by welding, baking the housing at 80°C to 100°C, injecting the electrolyte 40 to immerse the pole core, and performing formation and capacity grading, to obtain the secondary battery. The pole core may be a wound cell or may be a laminated cell.

According to a third aspect, this application provides a power-consuming device. The power-consuming device includes the foregoing secondary battery or the secondary battery prepared by using the foregoing method.

The power-consuming device provided in embodiments of this application includes the foregoing secondary battery with high safety performance and excellent electrochemical performance, thereby improving safety and stability of power consumption of the power-consuming device.

In some possible implementations, the cell, the battery module, the battery pack, or another secondary battery may be selected for the power-consuming device based on use requirements of the power-consuming device.

In some possible implementations, the power-consuming device may be, but is not limited to, a mobile device such as a mobile phone or a notebook computer, or an electric vehicle such as a pure electric vehicle, a hybrid electric vehicle, a plug-in hybrid electric vehicle, an electric bicycle, an electric scooter, an electric golf cart, or an electric truck, or an electric train, a ship and a satellite, or an energy storage system.

In some specific embodiments, the power-consuming device may be a pure electric vehicle, a hybrid electric vehicle, a plug-in hybrid electric vehicle, or the like. To meet requirements of these power-consuming devices for high power and high energy density of batteries, the foregoing battery pack or battery module may be used.

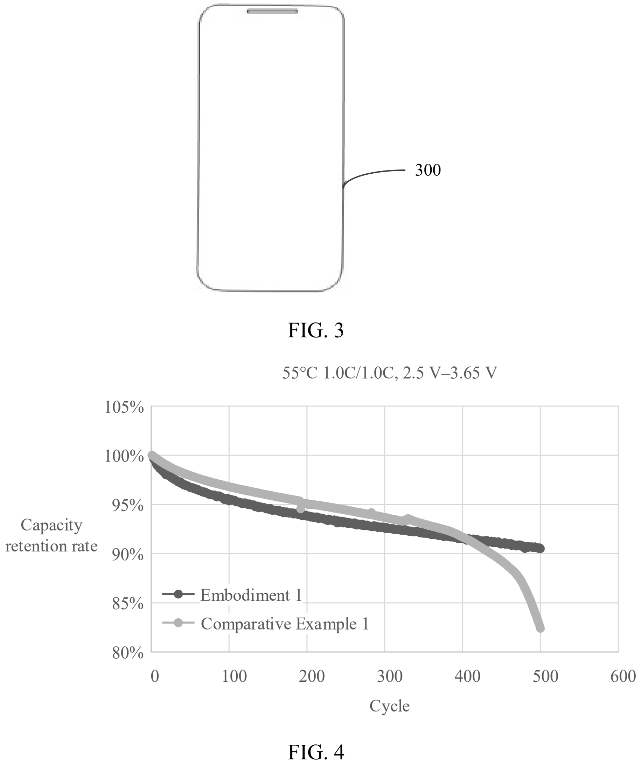

In some other specific embodiments, the power-consuming device may be a recorder, a radio, an electronic learning machine, a mobile phone, a tablet computer, a notebook computer, or the like. These power-consuming devices usually need to be light and thin, and the cell in the foregoing embodiments may be used as a power supply. For example, FIG. 3 is a diagram of a power-consuming device of a mobile terminal 300.

Embodiment

The following provides description with reference to specific embodiments. The embodiments described below are examples, and are merely intended to explain this application, but should not be construed as a limitation on this application. If no specific technique or condition is specified in the embodiments, a technique or condition described in the literature in the art or a product specification shall be followed. Reagents or instruments used with no indication of manufacturers are conventional products that are commercially available.

Positive and negative electrode materials used in lithium-ion batteries in the following embodiments and comparative examples of this application include the following types. The used materials may be prepared according to known techniques or may be commercially available products.

Active material core of the positive electrode active material 102: $LiFePO_4$ (LFP), $LiFe_{0.5}Mn_{0.5}PO_4$ (LMFP), $LiCoO_2$ (LCO), or $LiNi_8Co_1Mn_1O_2$ (NCM).

Negative electrode active material 202: graphite material.

Embodiments 1 to 22

In this application, Embodiments 1 to 22 each provide a lithium-ion battery, including a positive electrode 10, a negative electrode 20, a separator 30, and an electrolyte 40. The separator 30 is disposed between the positive electrode 10 and the negative electrode 20. The electrolyte 40 fills space between the positive electrode 10 and the negative electrode 20, and the separator 30 is immersed in the electrolyte 40.

The positive electrode 10 includes a positive electrode active material 102, and the positive electrode active material 102 includes an active material core and a carbon material coating layer. Parameters in each embodiment, such as a material of the active material core, a percentage by mass of the carbon material coating layer in the positive electrode active material 102, a specific surface area of the positive electrode active material 102, and a value of $R = I_D/I_G$ of the positive electrode active material 102 in a Raman test, are specifically shown in Table 1 below.

The electrolyte 40 includes ethylene carbonate (EC), ethyl methyl carbonate (EMC), dimethyl carbonate (DMC), lithium hexafluorophosphate ($LiPF_6$), vinylene carbonate (VC), and a silane additive. A mass ratio of EC:EMC:DMC is 30:30:40. A molar concentration of lithium hexafluorophosphate is 1 mol/L. A percentage by mass of vinylene carbonate (VC), and a specific type and content of the silane additive (tris(trimethylsilyl)phosphate TMSP and tris(trimethylsilyl) borate TMSB) are respectively shown in Table 1 below.

The preparation of the lithium-ion battery includes the following steps.

1. Preparation of the positive electrode 10: In a percentage by mass, 2% of polyvinylidene fluoride (PVDF), 2% of conductive agent Super P, and 96% of positive electrode active material 102 (for details in different embodiments, refer to Table 1 below) are weighed and added to N-methylpyrrolidone (NMP) in sequence, and are fully stirred and mixed uniformly to obtain a slurry. The slurry is applied on an aluminum-foil current collector, and then drying, cold pressing, and slitting are performed to obtain a positive electrode plate.

2. Preparation of the negative electrode 20: In a percentage by mass, 1.5% of sodium carboxymethylcellulose (CMC), 2.5% of styrene butadiene rubber (SBR), 1% of Super P, and 95% of negative electrode active material 202 graphite are weighed and added to deionized water in sequence, and are fully stirred and mixed uniformly to obtain a slurry. The slurry is applied on a copper-foil current collector, and then drying, cold pressing, and slitting are performed to obtain a negative electrode plate.

3. Preparation of the electrolyte 40: Ethylene carbonate (EC), ethyl methyl carbonate (EMC), and dimethyl carbonate (DMC) are mixed at a mass ratio of EC:EMC:DMC = 30:30:40, then lithium hexafluorophosphate ($LiPF_6$) is added to the obtained mixture until a molar concentration is 1 mol/L, and then vinylene carbonate (VC) and different types of silane additives (for details in different embodiments, refer to Table 1 below) are added, to obtain the electrolyte 40.

4. Battery assembly: The prepared positive electrode 10, the prepared negative electrode 20, and a commercial PE separator 30 are prepared into a cell. The cell is packaged with a polymer. The prepared electrolyte 40 is injected to immerse the cell. After formation and capacity grading are performed, a 4 Ah soft-pack lithium-ion battery is obtained.

Comparative Examples 1 to 4

In this application, Comparative Examples 1 to 4 respectively provide lithium-ion batteries, with differences from the lithium-ion battery in Embodiment 1 lying in: the active material core in the positive electrode active material 102, the specific surface area of the positive electrode active material 102, the percentage by mass of the carbon material in the positive electrode active material 102, the content of vinylene carbonate (VC), or the content of the silane additive. For details, refer to Table 1 below.

The following tests are performed for the embodiments and the comparative examples.

1. Values of Z in the embodiments and the comparative examples are calculated according to $Z = f/(a*e)$ based on the percentage by mass f of the silane additive in the electrolyte 40, the specific surface area a of the positive electrode active material 102, and the percentage by mass e of the carbon material on the surface of the positive electrode active material 102. Calculation results are shown in Table 1 below.

2. An area of 100 $\mu$m $\times$ 100 $\mu$m is selected from the positive electrode active material 102. The positive electrode plate in the area is scanned by using a laser microscopic confocal Raman spectrometer, to obtain D peaks and G peaks of carbon materials on all positive electrode material particles within this area. Data is processed by using LabSpec software to obtain peak intensity of the D peak and peak intensity of the G peak of the carbon material on each positive electrode active material 102 particle, respectively I(D) and I(G). A value of R is equal to a value of $I_D/I_G$, and is an average value of ratios of I(D) to I(G) of the carbon layers on all the positive electrode active material 102 particles measured within this area. Test results are shown in Table 1 below.

3. The lithium-ion batteries prepared in the embodiments and the comparative examples are tested respectively for 55°C high-temperature cycle performance and 60°C high-temperature cycle performance. Test methods are performed according to the following test examples.

(1) 55°C high-temperature cycle performance test:

The lithium-ion batteries prepared in the embodiments and the comparative examples are placed in an oven at a constant temperature of 55$\pm$3°C, respectively charged at a constant current of 1C to 3.65 V (when the core of the positive electrode active material is $LiFePO_4$), 4.1 V (when the core of the positive electrode active material is $LiFe_{0.5}Mn_{0.5}PO_4$), 4.5 V (when the core of the positive electrode active material is $LiCoO_2$), and 4.25 V (when the core of the positive electrode active material is $LiNi_8Co_1Mn_1O_2$), then charged at a constant voltage until the current decreases to 0.05C, and left to stand for 10 min. Then, the lithium-ion batteries are discharged at a constant current of 1C to 2.5 V ($LiFePO_4$), 2.5 V ($LiFe_{0.5}Mn_{0.5}PO_4$), 3.0 V ($LiCoO_2$), and 2.75 V ($LiNi_8Co_1Mn_1O_2$) for 500 cycles. Discharge capacity in the first cycle and discharge capacity in the 500th cycle are recorded. A capacity retention rate of the cycles is calculated according to the following formula:

capacity retention rate (%) = discharge capacity in the 500th cycle/discharge capacity in the first cycle $\times$ 100%

(2) 60°C 30-day storage performance test:

At an ambient temperature of 25$\pm$3°C, the batteries are charged and discharged once at 0.2C/0.2C, where capacity obtained in this case is initial capacity. The batteries are then charged at a constant current of 0.2C to 3.65 V ($LiFePO_4$), 4.1 V ($LiFe_{0.5}Mn_{0.5}PO_4$), 4.5 V ($LiCoO_2$), and 4.25 V ($LiNi_8Co_1Mn_1O_2$), and then charged at a constant voltage until the current decreases to 0.05C. The charged batteries are stored at 60°C for 30 days, then stored in an open circuit at room temperature for 2 h, and discharged at a constant current of 0.2C to 2.5 V ($LiFePO_4$), 2.5 V ($LiFe_{0.5}Mn_{0.5}PO_4$), 3.0 V ($LiCoO_2$), and 2.75 V ($LiNi_8Co_1Mn_1O_2$), where capacity obtained in this case is recorded as remaining capacity. A recorded remaining capacity retention rate of cycles is calculated according to the following formula:

recorded remaining capacity retention rate (%) = remaining capacity/initial capacity $\times$ 100%

The test results are shown in Table 1 below:

Table 1

| Test item / Test object | Positive electrode active material | | | | Electrolyte | | Z = f/(a*e) in a battery | Battery performance | |
|---|---|---|---|---|---|---|---|---|---|
| | Active material core | Specific surface area a of the positive electrode active material (m²/g) | Percentage by mass of a carbon material (%) | R value | Silane additive and a content f thereof (%) | Content of a VC additive (%) | | Capacity retention rate after 30 days of storage at 60°C (%) | Capacity retention rate after 500 cycles at 55°C (%) |
| Embodiment 1 | LFP | 10.0 | 2.5 | 1.1 | 0.5 (TMSP) | 2.0 | 0.02 | 95.5 | 90.5 |
| Embodiment 2 | LFP | 10.0 | 2.5 | 1.1 | 0.5 (TMSB) | 2.0 | 0.02 | 95.2 | 90.2 |
| Embodiment 3 | LFP | 10.0 | 2.5 | 0.8 | 0.5 (TMSP) | 1.5 | 0.02 | 94.8 | 89.6 |
| Embodiment 4 | LFP | 12.5 | 2.5 | 1.2 | 0.5 (TMSP) | 2.5 | 0.016 | 95.4 | 90.2 |
| Embodiment 5 | LFP | 10.0 | 2.0 | 1.0 | 0.5 (TMSB) | 1.0 | 0.025 | 95.0 | 90.0 |
| Embodiment 6 | LFP | 10.0 | 3.0 | 1.1 | 0.5 (TMSP) | 1.0 | 0.017 | 95.1 | 90.3 |
| Embodiment 7 | LFP | 10.0 | 2.0 | 1.1 | 0.5 (TMSP) | 1.0 | 0.025 | 94.9 | 90.1 |
| Embodiment 8 | LFP | 10.0 | 1.0 | 1.1 | 0.5 (TMSP) | 1.0 | 0.05 | 95.6 | 90.7 |
| Embodiment 9 | LMFP | 10.0 | 2.0 | 1.1 | 0.5 (TMSP) | 1.0 | 0.025 | 93.8 | 88.2 |
| Embodiment 10 | LFP | 10.0 | 0.5 | 1.1 | 0.5 (TMSP) | 1.0 | 0.1 | 93.1 | 87.8 |
| Embodiment 11 | LFP | 10.0 | 5 | 1.1 | 0.5 (TMSP) | 1.0 | 0.01 | 92.8 | 87.3 |
| Embodiment 12 | LFP | 10.0 | 2.0 | 1.1 | 1.0 (TMSB) | 1.0 | 0.05 | 91.9 | 86.1 |
| Embodiment 13 | LFP | 10.0 | 2.0 | 1.1 | 0.05 (TMSP) | 1.0 | 0.0025 | 90.6 | 85.5 |
| Embodiment 14 | LCO | 0.2 | 2.0 | 1.1 | 0.5 (TMSP) | 1.0 | 1.25 | 94.1 | 88.3 |
| Embodiment 15 | LCO | 0.2 | 2.5 | 1.1 | 0.5 (TMSP) | 1.0 | 1.0 | 94.2 | 88.5 |
| Embodiment 16 | LCO | 0.2 | 0.5 | 1.1 | 0.5 (TMSP) | 1.0 | 5.0 | 92.8 | 86.9 |
| Embodiment 17 | LCO | 0.2 | 2.0 | 1.1 | 0.8 (TMSP) | 1.0 | 2.0 | 92.1 | 96.1 |
| Embodiment 18 | LCO | 0.2 | 2.0 | 1.1 | 0.5 (TMSB) | 1.0 | 1.25 | 94.2 | 89.3 |
| Embodiment 19 | NCM | 0.5 | 2.5 | 1.1 | 0.5 (TMSB) | 1.0 | 0.4 | 94.9 | 89.8 |

(continued)

| Test item<br><br><br><br><br>Test object | Positive electrode active material | | | | Electrolyte | | Z = f/(a*e) in a battery | Battery performance | |
|---|---|---|---|---|---|---|---|---|---|
| | Active material core | Specific surface area a of the positive electrode active material (m²/g) | Percentage by mass e of a carbon material (%) | R value | Silane additive and a content f thereof (%) | Content of a VC additive (%) | | Capacity retention rate after 30 days of storage at 60°C (%) | Capacity retention rate after 500 cycles at 55°C (%) |
| Embodiment 20 | NCM | 0.5 | 2.5 | 1.1 | 0.5 (TMSP) | 1.0 | 0.4 | 95.0 | 89.6 |
| Embodiment 21 | LFP | 10.0 | 2.0 | 1.1 | 0.01 (TMSP) | 1.0 | 0.0005 | 88.1 | 85.1 |
| Embodiment 22 | LFP | 8.0 | 0.5 | 1.1 | 1.0 (TMSP) | 1.0 | 0.25 | 87.6 | 84.7 |
| Comparative Example 1 | LFP | 10.0 | 2.5 | 1.1 | 0 | 2.0 | / | 86.0 | 82.4 |
| Comparative Example 2 | LMFP | 10.0 | 2.0 | 1.1 | 0 | 1.0 | / | 85.8 | 81.8 |
| Comparative Example 3 | LCO | 0.2 | 2.0 | 1.1 | 0 | 1.0 | / | 86.8 | 83.3 |
| Comparative Example 4 | NCM | 0.5 | 2.5 | 1.1 | 0 | 1.0 | / | 87.1 | 83.5 |

It can be learned from the test results in Table 1 that, in the lithium-ion batteries prepared in Embodiments 1 to 22 of this application, the positive electrode active material 102 includes the active material core and the carbon material coating layer, the electrolyte 40 includes the electrolyte salt, the organic solvent, and the additive, and the amount of the silane additive in the lithium-ion battery allows $Z = f/(a*e)$ in the battery to meet $0.001 \leq Z \leq 15$, where f is the percentage by mass of the silane additive, a is the specific surface area of the positive electrode active material 102, and e is the percentage by mass of the carbon material in the positive electrode active material 102. Based on appropriate matching of the electrode material and the electrolyte 40, the additive in the electrolyte 40 can separately form a CEI film on the surface of the positive electrode and form an SEI film on the surface of the negative electrode in a process of initial charging and discharging, suppressing dissolution of metal ions from the electrode, reducing side reactions catalyzed due to contact between the electrolyte 40 and the electrode material, reducing battery impedance, and improving battery cycle performance. In this way, the lithium-ion batteries in the embodiments all exhibit a better capacity retention rate after 500 cycles at 55°C and a better capacity retention rate after 30 days of storage at 60°C, improving high-temperature performance of the lithium-ion batteries.

It indicates that, when parameters such as vinylene carbonate VC, the specific surface area of the positive electrode active material 102, and the content of the carbon material coating layer are fixed, according to $Z = f/(a*e)$ that meets $0.001 \leq Z \leq 15$, the amount of the silane additive in the additive can be appropriately designed, helping improve cycle performance, high-temperature energy storage performance, and other performance of the battery. The reason is as follows: The silane additive preferentially reacts on active sites of the carbon material coating layer in the process of initial charging and discharging, passivating reactivity on the surface of the carbon material coating layer, effectively avoiding side reactions catalyzed due to contact between the active sites on the surface of the carbon material coating layer and the electrolyte 40, and reducing irreversible consumption of active lithium and blockage or structure collapse of a lithium-conducting channel of the carbon material coating layer. In addition, an effective CEI film can be formed on the surface of the positive electrode, and dissolution of metal ions from the positive electrode can be suppressed, so that impedance is reduced, battery cycle performance is improved, and high-temperature performance is improved.

Specifically, through comparison of the 55°C high-temperature cycle performance test of the lithium-ion batteries between Embodiment 1 and Comparative Example 1 in FIG. 4, and through comparison of test data in Table 1 between Embodiments 1 and 2 and Comparative Example 1, between Embodiment 9 and Comparative Example 2, between Embodiment 14 and Comparative Example 3, and between Embodiments 19 and 20 and Comparative Example 4, it can be learned that a main difference lies in that no silane additive is added to the electrolytes 40 in all the comparative examples. The lithium-ion batteries prepared in the comparative examples all exhibit lower high-temperature cycle performance and lower high-temperature storage performance. It indicates that, if no silane additive is added to the electrolyte 40, the active sites of the carbon material coating layer on the surface of the positive electrode active material 102 cannot be passivated, intensifying side reactions of the electrolyte 40, consequently making cycle performance and high-temperature storage performance of the battery worse.

It can be learned through comparison between results of Embodiment 13 and results of Embodiment 21 that, when $Z < 0.001$, the content of the silane additive is excessively low, and in this case, the active sites of the coating layer on the surface of the positive electrode active material 102 cannot be fully passivated, suppression effect on side reactions after battery cycling is weakened, improvement on cycling is not great, and storage performance becomes worse.

It can be learned through comparison between test results of Embodiment 13 and test results of Embodiment 22 that, when the active material core is the LFP polyanionic salt, as the value of Z increases, the content of the silane additive increases, and the thickness of a passivation film increases, consequently increasing impedance, increasing polarization of charging and discharging, leading to poor improvement effect on battery cycling, and reducing storage performance.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A secondary battery, wherein the secondary battery comprises a positive electrode, a negative electrode, a separator, and an electrolyte, wherein the positive electrode comprises a positive electrode active material, the positive electrode active material comprises an active material core and a carbon material coating layer, the electrolyte comprises an electrolyte salt, an organic solvent, and an additive, and the additive comprises a silane additive, wherein an amount of the silane additive is determined based on a specific surface area of the positive electrode active material and a content of a carbon material in the positive electrode active material.

2. The secondary battery according to claim 1, wherein in the secondary battery, a percentage by mass of the silane additive in the electrolyte is denoted as f (unit: %), the specific surface area of the positive electrode active material is denoted as a (unit: $m^2/g$), and a percentage by mass of the carbon material in the positive electrode active material is denoted as e (unit: %), such that $Z = f/(a*e)$ meets $0.001 \leq Z \leq 15$.

3. The secondary battery according to claim 1 or 2, wherein the silane additive comprises at least one of tris(trimethylsilyl)phosphate, tris(trimethylsilyl)borate, tris(trimethylsilyl)phosphite, tris(triethylsilyl)phosphate, tris(triethylsilyl)borate, tris(triethylsilyl)phosphite, tris(trifluoromethylsilyl)phosphate, tris(trifluoromethylsilyl)borate, tris(trifluoromethylsilyl)phosphite, tris(trifluoroethylsilyl)phosphate, tris(trifluoroethylsilyl)borate, and tris(trifluoroethylsilyl)phosphite.

4. The secondary battery according to claim 3, wherein the percentage by mass of the silane additive in the electrolyte is 0.01% to 1.0%.

5. The secondary battery according to claim 3, wherein the percentage by mass of the carbon material in the positive electrode active material is 0.5% to 5%.

6. The secondary battery according to claim 3, wherein the specific surface area of the positive electrode active material is 0.1 $m^2/g$ to 20 $m^2/g$.

7. The secondary battery according to any one of claims 1, 2, and 4 to 6, wherein the active material core comprises at least one of a metal oxide and a polyanionic salt.

8. The secondary battery according to claim 7, wherein the metal oxide comprises at least one of lithium cobaltate, lithium nickelate, lithium nickel cobalt manganese oxide, lithium nickel cobalt aluminum oxide, lithium manganate, lithium nickel manganese oxide, and lithium vanadate; and/or

the polyanionic salt comprises at least one of lithium iron phosphate, lithium manganese phosphate, lithium manganese iron phosphate, lithium vanadium phosphate, lithium vanadyl phosphate, lithium cobalt phosphate, lithium nickel phosphate, lithium iron silicate, lithium iron fluorosulfate, lithium iron borate, and lithium iron titanate.

9. The secondary battery according to claim 8, wherein when the active material core comprises the metal oxide, the specific surface area of the positive electrode active material is 0.1 m$^2$/g to 1.0 m$^2$/g, such that $0.01 \leq Z \leq 15$ is fulfilled.

10. The secondary battery according to claim 9, wherein when the active material core comprises the metal oxide, the specific surface area of the positive electrode active material is 0.2 m$^2$/g to 0.8 m$^2$/g, such that $0.02 \leq Z \leq 10$ is fulfilled.

11. The secondary battery according to claim 8, wherein when the active material core comprises the polyanionic salt, the specific surface area of the positive electrode active material is 7 m$^2$/g to 20 m$^2$/g, such that $0.001 \leq Z \leq 0.2$ is fulfilled.

12. The secondary battery according to claim 11, wherein when the active material core comprises the polyanionic salt, the specific surface area of the positive electrode active material is 9 m$^2$/g to 15 m$^2$/g, such that $0.002 \leq Z \leq 0.1$ is fulfilled.

13. The secondary battery according to any one of claims 1, 2, 4 to 6, and 8 to 12, wherein a peak intensity ratio of a D peak to a G peak of the positive electrode active material in a Raman test is R = $I_D/I_G$, and a value range of R is 0.6 to 1.3.

14. The secondary battery according to claim 13, wherein the value range of the peak intensity ratio R of the D peak to the G peak of the positive electrode active material in the Raman test is 0.8 to 1.2.

15. The secondary battery according to any one of claims 1, 2, 4 to 6, 8 to 12, and 14, wherein the additive further comprises vinylene carbonate.

16. The secondary battery according to claim 15, wherein a percentage by mass of the vinylene carbonate in the electrolyte is 0.1% to 5%.

17. The secondary battery according to any one of claims 1, 2, 4 to 6, 8 to 12, 14, and 16, wherein the electrolyte salt comprises at least one of LiClO$_4$, LiBF$_4$, LiPF$_6$, LiAsF$_6$, LiCF$_3$SO$_3$, LiTDI, Li[(CF$_3$SO$_2$)$_2$N], Li[(FSO$_2$)$_2$N], and Li[(C$_m$F$_{2m+1}$SO$_2$)(C$_n$F$_{2n+1}$SO$_2$)N], wherein m and n are natural numbers.

18. The secondary battery according to claim 17, wherein a molar concentration of the electrolyte salt in the electrolyte is 0.01 mol/L to 5.0 mol/L.

19. The secondary battery according to any one of claims 1, 2, 4 to 6, 8 to 12, 14, 16, and 18, wherein the organic solvent comprises at least one of a carbonate solvent, an ether solvent, and a carboxylate solvent.

20. The secondary battery according to claim 19, wherein the electrolyte further comprises an auxiliary additive comprising at least one of biphenyl, fluorobenzene, trifluoromethyl ethylene carbonate, fluoroethylene carbonate, difluoroethylene carbonate, vinyl ethylene carbonate, 1,3-propane sultone, 1,4-butane sultone, 1,3-propene sultone, ethylene sulfate, ethylene sulfite, methylene methanedisulfonate, butanedinitrile, hexanedinitrile, 1,2-bis(2-cyanoethoxy)ethane, 1,3,6-hexanetricarbonitrile, lithium bis(oxalato)borate, lithium difluoro(oxalato)borate, lithium difluorobis(oxalato)phosphate, and lithium difluorophosphate.

21. The secondary battery according to any one of claims 1, 2, 4 to 6, 8 to 12, 14, 16, 18, and 20, wherein the secondary battery comprises a lithium-ion battery.

22. The secondary battery according to any one of claims 1, 2, 4 to 6, 8 to 12, 14, 16, 18, and 20, wherein the negative electrode comprises a negative electrode active material comprising at least one of a carbon-based negative electrode material, a silicon-based negative electrode material, and lithium titanate.

23. The secondary battery according to any one of claims 1, 2, 4 to 6, 8 to 12, 14, 16, 18, and 20, wherein the secondary battery comprises at least one of a cell, a battery module, and a battery pack.

24. A method for preparing a secondary battery, comprising the following steps:

obtaining a positive electrode, a negative electrode, and a separator, wherein the positive electrode comprises a positive electrode active material, and the positive electrode active material comprises an active material core and a carbon material coating layer;

preparing an electrolyte comprising an electrolyte salt, an organic solvent, and an additive, wherein the additive comprises a silane additive, and an amount of the silane additive is determined based on a specific surface area of the positive electrode active material and a content of a carbon material in the positive electrode active material; and

assembling the positive electrode, the negative electrode, the separator, and the electrolyte into the secondary battery.

25. The method for preparing the secondary battery according to claim 24, wherein in the secondary battery, a percentage by mass of the silane additive in the electrolyte is denoted as f (unit: %), the specific surface area of the positive electrode active material is denoted as a (unit: $m^2/g$), and a percentage by mass of the carbon material in the positive electrode active material is denoted as e (unit: %), such that $Z = f/(a*e)$ meets $0.001 \leq Z \leq 15$.

26. The method for preparing the secondary battery according to claim 24 or 25, wherein the silane additive comprises at least one of tris(trimethylsilyl)phosphate, tris(trimethylsilyl)borate, tris(trimethylsilyl)phosphite, tris(triethylsilyl)phosphate, tris(triethylsilyl)borate, tris(triethylsilyl)phosphite, tris(trifluoromethylsilyl)phosphate, tris(trifluoromethylsilyl)borate, tris(trifluoromethylsilyl)phosphite, tris(trifluoroethylsilyl)phosphate, tris(trifluoroethylsilyl)borate, and tris(trifluoroethylsilyl)phosphite.

27. The method for preparing the secondary battery according to claim 26, wherein the percentage by mass of the silane additive in the electrolyte is 0.01% to 1.0%.

28. The method for preparing the secondary battery according to claim 26, wherein the percentage by mass of the carbon material in the positive electrode active material is 0.5% to 5%.

29. The method for preparing the secondary battery according to claim 26, wherein the specific surface area of the positive electrode active material is 0.1 $m^2/g$ to 20 $m^2/g$.

30. A power-consuming device, wherein the power-consuming device comprises the secondary battery according to any one of claims 1 to 23 or the secondary battery prepared by using the method according to any one of claims 24 to 29.

FIG. 1

| | |
|---|---|
| Obtain a positive electrode, a negative electrode, and a separator, where the positive electrode includes a positive electrode active material, and the positive electrode active material includes an active material core and a carbon material coating layer | S10 |

| | |
|---|---|
| Prepare an electrolyte including an electrolyte salt, an organic solvent, and an additive, where the additive includes a silane additive, and an amount of the silane additive is determined based on a specific surface area of the positive electrode active material and a content of a carbon material in the positive electrode active material | S20 |

| | |
|---|---|
| Assemble the positive electrode, the negative electrode, the separator, and the electrolyte into a secondary battery | S30 |

FIG. 2

FIG. 3

55°C 1.0C/1.0C, 2.5 V–3.65 V

FIG. 4

## INTERNATIONAL SEARCH REPORT

| International application No. |
|---|
| **PCT/CN2024/086582** |

### A. CLASSIFICATION OF SUBJECT MATTER

H01M10/0525(2010.01)i

According to International Patent Classification (IPC) or to both national classification and IPC

### B. FIELDS SEARCHED

Minimum documentation searched (classification system followed by classification symbols)

CPC/IPC: H01M

Documentation searched other than minimum documentation to the extent that such documents are included in the fields searched

Electronic data base consulted during the international search (name of data base and, where practicable, search terms used)

CNTXT, WPABS, ENTXTC, DWPI, VEN, CNKI: 电池, 锂, 比表面积, 添加剂, 硅烷, 电解液, 正极, 活性物质, 碳, 导电, 包覆, 核, lithium, battery, shell, core, cover, carbon, positive, electrode, electrolyte, additive, silicone, saline

### C. DOCUMENTS CONSIDERED TO BE RELEVANT

| Category* | Citation of document, with indication, where appropriate, of the relevant passages | Relevant to claim No. |
|---|---|---|
| X | CN 114447295 A (SHENZHEN CAPCHEM TECHNOLOGY CO., LTD.) 06 May 2022 (2022-05-06) description, paragraphs 53 and 132-169, table 2, and embodiment 32 | 1-30 |
| A | CN 109075387 A (LG CHEMICAL LTD.) 21 December 2018 (2018-12-21) entire description | 1-30 |
| A | CN 113675475 A (CONTEMPORARY AMPEREX TECHNOLOGY CO., LTD.) 19 November 2021 (2021-11-19) entire description | 1-30 |
| A | CN 115939513 A (SHENZHEN CAPCHEM TECHNOLOGY CO., LTD.) 07 April 2023 (2023-04-07) entire description | 1-30 |
| A | JP 2007165298 A (MITSUBISHI CHEMICAL CORP.) 28 June 2007 (2007-06-28) description, paragraphs 150-161 and 186 | 1-30 |
| A | US 2009202892 A1 (KABUSHIKI KAISHA TOSHIBA) 13 August 2009 (2009-08-13) description, paragraphs 31, 71-122 and 143-145 | 1-30 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 June 2024** | **26 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/086582** |

### C. DOCUMENTS CONSIDERED TO BE RELEVANT

| Category* | Citation of document, with indication, where appropriate, of the relevant passages | Relevant to claim No. |
| --- | --- | --- |
| A | WO 2014065117 A1 (SHARP KABUSHIKI KAISHA) 01 May 2014 (2014-05-01)<br>entire description | 1-30 |

Form PCT/ISA/210 (second sheet) (July 2022)

## INTERNATIONAL SEARCH REPORT
### Information on patent family members

International application No.

**PCT/CN2024/086582**

| Patent document cited in search report | | | Publication date (day/month/year) | Patent family member(s) | | | Publication date (day/month/year) |
|---|---|---|---|---|---|---|---|
| CN | 114447295 | A | 06 May 2022 | None | | | |
| CN | 109075387 | A | 21 December 2018 | PL | 3416228 | T3 | 27 July 2020 |
| | | | | KR | 20180086141 | A | 30 July 2018 |
| | | | | KR | 102053313 | B1 | 06 December 2019 |
| | | | | EP | 3416228 | A1 | 19 December 2018 |
| | | | | EP | 3416228 | A4 | 24 April 2019 |
| | | | | EP | 3416228 | B1 | 01 April 2020 |
| | | | | US | 2019089004 | A1 | 21 March 2019 |
| | | | | US | 10700381 | B2 | 30 June 2020 |
| CN | 113675475 | A | 19 November 2021 | None | | | |
| CN | 115939513 | A | 07 April 2023 | None | | | |
| JP | 2007165298 | A | 28 June 2007 | None | | | |
| US | 2009202892 | A1 | 13 August 2009 | JP | 2009187834 | A | 20 August 2009 |
| | | | | JP | 5305678 | B2 | 02 October 2013 |
| | | | | US | 8524411 | B2 | 03 September 2013 |
| WO | 2014065117 | A1 | 01 May 2014 | JP | 2016001516 | A | 07 January 2016 |

Form PCT/ISA/210 (patent family annex) (July 2022)

**REFERENCES CITED IN THE DESCRIPTION**

**Patent documents cited in the description**

- CN 202310458768